# EUROPEAN PATENT APPLICATION

(11) **EP 4 564 857 A1**
(43) Date of publication of application: **04.06.2025**
(21) Application number: 23845375.7
(22) Date of filing: 18.07.2023
(51) Int. Cl.: H04W 4/029

(54) **POSITIONING METHOD, TERMINAL AND NETWORK DEVICE**

(30) Priority: 25.07.2022 CN 202210880561
(71) Applicant: Vivo Mobile Communication Co., Ltd., Dongguan, Guangdong 523863 (CN)
(72) Inventor: ZHANG, Hongping, Dongguan, Guangdong 523863 (CN); PAN, Xiang, Dongguan, Guangdong 523863 (CN); WANG, Yuanyuan, Dongguan, Guangdong 523863 (CN); LI, Yuan, Dongguan, Guangdong 523863 (CN)
(74) Representative: Lavoix
(86) International application number: PCT/CN2023/107902
(87) International publication number: WO 2024/022163

(57) **Abstract**

Disclosed in the present application are a method for positioning, a terminal, and a network device, which belong to the field of communications technologies. The method for positioning according to embodiments of the present application includes: obtaining, by a first terminal, a sidelink location request, where the sidelink location request is used to request location of a target terminal, and the first terminal is a terminal providing a sidelink location server function; and executing, by the first terminal, a sidelink location operation based on the sidelink location request, and obtaining a positioning result of the target terminal.

## Description

### CROSS-REFERENCE TO RELATED APPLICATIONS

The present application claims the priority of Chinese Patent Application No. 202210880561.X filed in China on July 25, 2022, the entire content of which is hereby incorporated by reference.

### TECHNICAL FIELD

The present application belongs to the field of communications technologies, and particularly relates to a method for positioning, a terminal, and a network device.

### BACKGROUND

Currently, terminal positioning in some communication systems supports only a Uu-interface-based positioning method. Specifically, an access and mobility management function (Access and Mobility Management Function, AMF) receives a location service request for a terminal from a third party, a terminal, or itself, then the AMF transmits the location service request to a location management function (Location Management Function, LMF), and the LMF initiates a specific Uu interface positioning process to obtain a location of the terminal. Since only the Uu-interface-based positioning method is supported, positioning performance of the terminal is poor.

### SUMMARY

Embodiments of the present application provide a method for positioning, a terminal, and a network device, to solve a problem of poor positioning performance of a terminal.

According to a first aspect, a method for positioning is provided. The method includes:
obtaining, by a first terminal, a sidelink (sidelink) location request, where the sidelink location request is used to request location of a target terminal, and the first terminal is a terminal providing a sidelink location server function; and
executing, by the first terminal, a sidelink location operation based on the sidelink location request, and obtaining a positioning result of the target terminal.

According to a second aspect, a method for positioning is provided. The method includes:
transmitting, by a second terminal, a sidelink location request to a first terminal, where the sidelink location request is used to request location of a target terminal, and the first terminal is a terminal providing a sidelink location server function; and
the second terminal and the target terminal are a same terminal, or, the second terminal and the target terminal are different terminals.

According to a third aspect, a method for positioning is provided. The method includes:
transmitting, by a network device, a sidelink location request to a first terminal, where the sidelink location request is used to request location of a target terminal, the first terminal is a terminal providing a sidelink location server function, or, the first terminal is the target terminal.

According to a fourth aspect, an apparatus for positioning is provided. The apparatus includes:
an obtainment module used to obtain a sidelink location request, where the sidelink location request is used to request location of a target terminal, and a first terminal is a terminal providing a sidelink location server function; and
an execution module used to execute a sidelink location operation based on the sidelink location request, and obtain a positioning result of the target terminal.

According to a fifth aspect, an apparatus for positioning is provided. The apparatus includes:
a transmission module used to transmit a sidelink location request to a first terminal, where the sidelink location request is used to request location of a target terminal, and the first terminal is a terminal providing a sidelink location server function; and
a second terminal and the target terminal are a same terminal, or, a second terminal and the target terminal are different terminals.

According to a sixth aspect, an apparatus for positioning is provided. The apparatus includes:
a first transmission module used to transmit a sidelink location request to a first terminal, where the sidelink location request is used to request location of a target terminal, the first terminal is a terminal providing a sidelink location server function, or, the first terminal is the target terminal.

According to a seventh aspect, a terminal is provided. The terminal includes a processor and a memory. The memory stores a program or an instruction runnable on the processor, and when executed by the processor, the program or the instruction implements steps of the method for positioning on a first terminal side according to the embodiments of the present application.

According to an eighth aspect, a terminal is provided. The terminal includes a processor and a communication interface, where the processor or the communication interface is used to obtain a sidelink location request. The sidelink location request is used to request location of a target terminal, and a first terminal is a terminal providing a sidelink location server function; and the communication interface is used to execute a sidelink location operation based on the sidelink location request, and obtain a positioning result of the target terminal.

According to a ninth aspect, a terminal is provided. The terminal includes a processor and a memory. The memory stores a program or an instruction runnable on the processor, and when executed by the processor, the program or the instruction implements steps of the method for positioning on a second terminal side according to the embodiments of the present application.

According to a tenth aspect, a terminal is provided. The terminal includes a processor and a communication interface, where the communication interface is used to transmit a sidelink location request to a first terminal. The sidelink location request is used to request location of a target terminal, and the first terminal is a terminal that provides a sidelink location server function; and a second terminal and the target terminal are a same terminal, or, a second terminal and the target terminal are different terminals.

According to a tenth aspect, a network device is provided. The network device includes a processor and a memory. The memory stores a program or an instruction runnable on the processor, and when executed by the processor, the program or the instruction implements steps of the method for positioning on a network device side according to the embodiments of the present application.

According to an eleventh aspect, a network device is provided. The network device includes a processor and a communication interface, where the communication interface is used to transmit a sidelink location request to a first terminal. The sidelink location request is used to request location of a target terminal, the first terminal is a terminal that provides a sidelink location server function, or, the first terminal is the target terminal.

According to a twelfth aspect, a readable storage medium is provided. The readable storage medium stores a program or an instructions. When executed by a processor, the program or the instruction implements steps of the method for positioning on a first terminal side according to the embodiments of the present application, alternatively, when executed by a processor, the program or the instruction implements steps of the method for positioning on a second terminal side according to the embodiments of the present application, or, when executed by the processor, the program or the instruction implements steps of the method for positioning on a network device side according to the embodiments of the present application.

According to a thirteenth aspect, a chip is provided. The chip includes a processor and a communication interface. The communication interface is coupled to the processor. The processor is used to run a program or an instruction to implement the method for positioning on a first terminal side according to the embodiments of the present application, alternatively, the processor is used to run a program or an instruction to implement the method for positioning on a second terminal side according to the embodiments of the present application, or, the processor is used to run a program or an instruction to implement a packet processing method on a network device side according to the embodiments of the present application.

According to a fourteenth aspect, a computer program/program product is provided. The computer program/program product is stored in a storage medium. The computer program/program product is executed by at least one processor to implement steps of the method for positioning on a first terminal side according to the embodiments of the present application, alternatively, the computer program/program product is executed by at least one processor to implement steps of the method for positioning on a second terminal side according to the embodiments of the present application, or, the computer program/program product is executed by at least one processor to implement steps of the method for positioning on a network device side according to the embodiments of the present application.

According to a fifteenth aspect, a system for positioning is provided. The system for positioning includes: a first terminal, a second terminal, and a network device. The terminal may be used to execute steps of the method for positioning on a first terminal side according to the embodiments of the present application. The second terminal may be used to execute steps of the method for positioning on a second terminal side according to the embodiments of the present application. The network device may be used to execute steps of the method for positioning on a network device side according to the embodiments of the present application.

In the embodiments of the present application, the first terminal obtains the sidelink location request. The sidelink location request is used to request location of a target terminal, and the first terminal is a terminal providing a sidelink location server function; and the first terminal executes the sidelink location operation based on the sidelink location request, and obtains the positioning result of the target terminal. In this way, the first terminal that provides the sidelink location server function executes the sidelink location operation based on the sidelink location request, to support sidelink location, and improve positioning performance of the terminal.

### BRIEF DESCRIPTION OF THE DRAWINGS

FIG. 1 is a block diagram of a radio communication system to which an embodiment of the present application is applicable;
FIG. 2 is a flowchart of a method for positioning according to an embodiment of the present application;
FIG. 3 is a schematic diagram of a positioning protocol stack according to an embodiment of the present application;
FIG. 4 is a schematic diagram of a positioning architecture according to an embodiment of the present application;
FIG. 5 is a flowchart of another method for positioning according to an embodiment of the present application;
FIG. 6 is a flowchart of yet another method for positioning according to an embodiment of the present application;
FIG. 7 is a schematic diagram of a method for positioning according to an embodiment of the present application;
FIG. 8 is a schematic diagram of another method for positioning according to an embodiment of the present application;
FIG. 9 is a schematic diagram of yet another method for positioning according to an embodiment of the present application;
FIG. 10 is a schematic diagram of still another method for positioning according to an embodiment of the present application;
FIG. 11 is a structural diagram of an apparatus for positioning according to an embodiment of the present application;
FIG. 12 is a structural diagram of another apparatus for positioning according to an embodiment of the present application;
FIG. 13 is a structural diagram of yet another apparatus for positioning according to an embodiment of the present application;
FIG. 14 is a structural diagram of a communication device according to an embodiment of the present application;
FIG. 15 is a structural diagram of a terminal according to an embodiment of the present application; and
FIG. 16 is a structural diagram of a network device according to an embodiment of the present application.

### DETAILED DESCRIPTION

The technical solutions in embodiments of the present application are clearly described in the following with reference to the accompanying drawings in the embodiments of the present application. Apparently, the described embodiments are some embodiments rather than all embodiments of the present application. All other embodiments obtained by those of ordinary skill in the art fall within the protection scope of the present application based on the embodiments of the present application.

The terms "first", "second" and so forth, in the specification and claims of the present application, are used to distinguish between similar objects, instead of describing a particular order or sequential order. It should to be understood that terms used in this way are exchangeable in a proper case, such that the embodiments of the present application can be implemented in an order different from the order shown or described herein. Objects distinguished by "first" and "second" are usually of one type, and the number of the objects is not limited. For example, one or more first objects may be provided. In addition, "and/or" used in the specification and the claims represents at least one of connected objects. The character "/" generally represents that associated objects are in an "or" relationship.

It is worth pointing out that the technologies described in the embodiments of the present application are not limited to a long term evolution (Long Term Evolution, LTE)/long term evolution-advanced (LTE-Advanced LTE-A) system, and may further be applied to other radio communication systems such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of the present application are often used interchangeably. The technology described can be applied to the systems and radio technologies mentioned above, and can also be applied to other systems and radio technologies. The following descriptions describe a new radio (New Radio, NR) system for example purposes. NR terms are used in most of the following descriptions. However, these technologies may also be applied to applications other than an NR system application, for example, a 6th generation (6^{th} Generation, 6G) communication system.

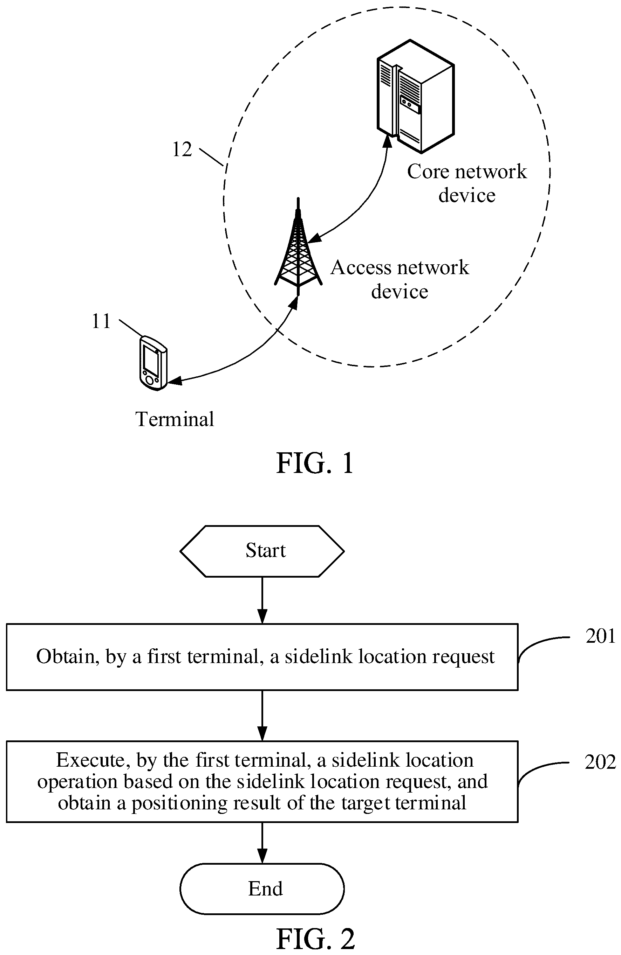

FIG. 1 shows a block diagram of a radio communication system to which the embodiment of the present application is applicable. The radio communication system includes a terminal 11 and a network device 12. The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), an augmented reality (augmented reality, AR)/virtual reality (virtual reality, VR) device, a robot, a wearable device (Wearable Device), vehicle user equipment (Vehicle User Equipment, VUE), a pedestrian terminal (Pedestrian User Equipment, PUE), a smart home (a home device having a radio communication function, such as a refrigerator, a television, a washing machine, or furniture), a game console, a personal computer (personal computer, PC), a teller machine, or a self-service machine. The wearable device includes: a smartwatch, a smart band, a smart headset, smart glasses, smart jewelry (a smart bangle, a smart chain bracelet, a smart ring, a smart necklace, a smart anklet, etc.), a smart wristband, smart clothes, etc. It should be noted that a specific type of the terminal 11 is not limited in the embodiments of the present application.

In the embodiment of the present application, sidelink (sidelink, referred to as SL for short) transmission may be performed between the terminals 11, that is, data transmission is performed between the terminals 11 directly on a physical layer. SL transmission between the terminals 11 may be broadcast, unicast, multicast, groupcast, etc. All terminals for SL transmission may be on a network or off a network, or some devices may be on a network and some devices may be off a network. Herein, "on a network" may refer to being within coverage of a communication network, and herein, "off a network" may refer to being out of coverage of a communication network.

The network device 12 may include an access network device or a core network device. The network device 12 or may be referred to as a radio access network device, a radio access network (Radio Access Network, RAN), a radio access network function, or a radio access network unit. The network device 12 may include a base station, a wireless local area network (Wireless Local Area Network, WLAN) access point, a WiFi node, etc. The base station may be referred to as a node B, an evolved node B (eNB), an access point, a base transceiver station (Base Transceiver Station, BTS), a radio base station, a radio transceiver, a basic service set (Basic Service Set, BSS), an extended service set (Extended Service Set, ESS), a home node B, a home evolved node B, a transmitting receiving point (Transmitting Receiving Point, TRP), or another proper term in the art. As long as the same technical effect is achieved, the base station is not limited to a specific technical word. It should be noted that in the embodiment of the present application, a base station in an NR system is taken as an example for introduction merely, and a specific type of the base station is not limited. The core network device may include, but is not limited to, at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), a centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), etc. It should be noted that in the embodiment of the present application, a core network device in an NR system is taken as an example for introduction merely, and a specific type of the core network device is not limited.

In addition, the system may further include an LMF.

A method for positioning, a terminal and a network device according to the embodiments of the present application are described in detail below in combination with the accompanying drawings through some embodiments and their application scenarios.

With reference to FIG. 2, FIG. 2 is a flowchart of a method for positioning according to the embodiment of the present application. As shown in FIG. 2, the method includes the following steps:
Step 201: A first terminal obtains a sidelink location request, where the sidelink location request is used to request location of a target terminal, and the first terminal is a terminal providing a sidelink location server function.

The sidelink location request may be received by the first terminal and transmitted by another device, or may be generated by the first terminal.

The first terminal is a terminal providing a sidelink location server function, specifically, this may be understood as that the first terminal is a terminal that controls sidelink location execution in a sidelink location process. Thus the first terminal may be referred to as a location server terminal (Location Server UE), or may be referred to as a controlling terminal (controlling UE).

In the embodiment of the present application, the sidelink location server function may refer to a function that controls sidelink location to be executed, that is, the sidelink location is controlled by a terminal that provides the sidelink location server function. For example, based on location QoS, using which sidelink location method is determined, which terminals participate in location are determined, and sidelink location configuration information is determined.

Step 202: The first terminal executes the sidelink location operation based on the sidelink location request, and obtains the positioning result of the target terminal.

The sidelink location operation may be executed based on the sidelink location request as follows: the sidelink location is triggered based on the sidelink location request.

In addition, the sidelink location operation may be executed based on the sidelink location request as follows: sidelink location is executed based on the sidelink location request by using a sidelink positioning protocol (SideLink Positioning Protocol, SLPP).

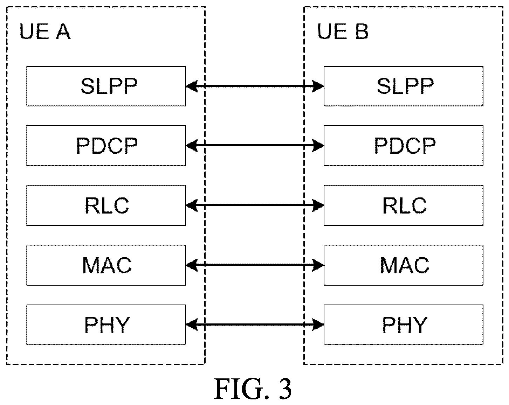

The foregoing SLPP is a newly defined positioning protocol in the embodiment of the present application. The protocol defines a new protocol layer for Sidelink location. The protocol layer is used for location server UE to exchange a location message with a target terminal (target UE) and an anchor terminal (anchor UE). Alternatively, in a case that the location server UE is the target UE, the protocol layer is used for the target UE to exchange a location message with the anchor UE. Alternatively, the protocol layer is used for the location server UE to exchange a location message with the target terminal (target UE) and a reference terminal (Reference UE). Alternatively, in a case that the location server UE is the target UE, the protocol layer is used for the target UE to exchange a location message with the Reference UE. A sidelink positioning protocol stack of the SLPP may be shown in FIG. 3. In FIG. 3, an SLPP layer is a newly introduced protocol layer for sidelink location, and is located on a layer above a packet data convergence protocol (Packet Data Convergence Protocol, PDCP) layer. It should be noted that the sidelink positioning protocol stack shown in FIG. 3 is merely an example for description. For example, in some implementations, the SLPP is located on a layer above a PC5 radio resource control (Radio Resource Control, RRC) layer or a vehicle-to-everything (Vehicle-to-Everything, V2X) layer.

It should be noted that a name of the sidelink positioning protocol used for sidelink location in the embodiment of the present application is not limited to SLPP. For example, in some implementations, the name or may be directly referred to as a sidelink positioning protocol.

In the embodiment of the present application, through the above steps, the first terminal that provides the sidelink location server function executes the sidelink location operation based on the sidelink location request, to support sidelink location, and improve positioning performance of the terminal.

As an optional implementation, the first terminal obtains the sidelink location request as one of the following:
the first terminal receives a first sidelink location request from a network device;
the first terminal receives a second sidelink location request from a second terminal through a sidelink unicast connection; and
the first terminal generates a third sidelink location request.

The network device may be an LMF or an AMF.

In a case that the network device is an LMF, the first sidelink location request message may be an LTE positioning protocol (LTE Positioning Protocol, LPP) message or a location server (Location Server, LCS) message.

In a case that the network device is an AMF, the first sidelink location request message is a non-access stratum (Non-Access Stratum, NAS) message.

The second sidelink location request may be a message transmitted between the first terminal and the second terminal through the sidelink unicast connection. For example, the second sidelink location request may be at least one of the following:
a Sidelink positioning protocol message, a PC5-signaling (Signaling, S) message, and a PC5 radio resource control (Radio Resource Control, RRC) message.

The first terminal generates the third sidelink location request that may be an inter-layer message inside the first terminal, that is, a sidelink location request generated inside the terminal. For example, the terminal generates an internal location request and delivers the internal location request to a sidelink positioning protocol layer of the first terminal.

In the implementation, a plurality of devices may trigger sidelink location, such that sidelink location is applicable to more scenarios.

As an optional implementation, the sidelink location request includes at least one of the following:
location quality of service (Quality of Service, QoS) and identification information of the target terminal.

The location QoS may include at least one of location accuracy, a location delay, etc.

The identification information of the target terminal may be a terminal identifier (UE ID) of the target terminal, and may be specifically at least one of the following identifiers of the target terminal:
a layer 2 identifier (L2 ID), an application terminal identifier (Application UE ID), an S-temporary mobile subscription identifier (S-Temporary Mobile Subscription Identifier, S-TMSI), an international mobile subscriber identity (International Mobile Subscription Identity, IMSI), a subscription permanent Identifier (Subscription Permanent Identifier, SUPI), or the like.

In the implementation, by using the location QoS, the first terminal may obtain location accuracy and a location delay that need to be achieved. The target terminal that needs to be positioned may be quickly determined by using the identification information of the target terminal.

It should be noted that in some implementations, the sidelink location request may not include the location QoS. For example, the location QoS may be agreed upon in a protocol, pre-configured on a network side, or pre-negotiated between the terminals. In some implementations, the sidelink location request may not include the identification information of the target terminal. For example, in a case that the first terminal is the target terminal, the sidelink location request may not include the identification information of the target terminal, and the first terminal may directly determine that the first terminal is the target terminal.

Optionally, the method further includes:
based on the location QoS, the first terminal determines at least one of the following:
a sidelink location method, location configuration information, an anchor terminal participating in location, and a reference terminal participating in location, where
the anchor terminal is a terminal having a known location and participating in transmitting a sidelink positioning reference signal, or, the anchor terminal is a terminal having a known location and participating in measuring a sidelink positioning reference signal; and
the reference terminal is a position reference terminal for relative location or range location.

The sidelink location method is used to represent that which method is used for location in a sidelink location process. For example, a delay-type location method is used, such as time difference of arrival location and round-trip delay difference location; and for example, a phase-type location method is used, for example, location with a phase difference of signal arrival.

The location configuration information may be location assistance information, for example, configuration information of a sidelink positioning reference signal.

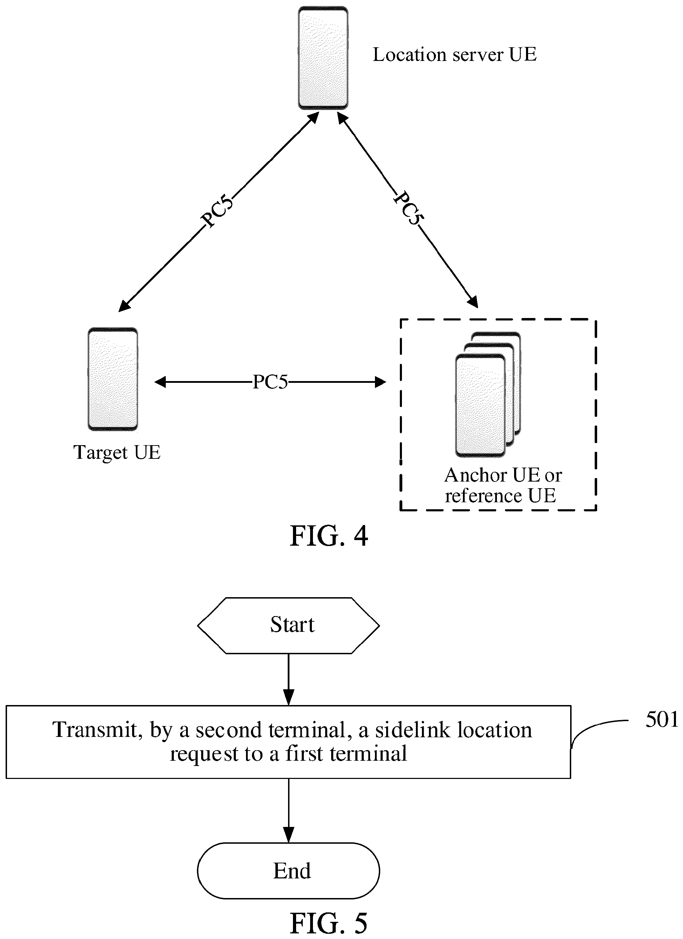

A location architecture in the implementation may be shown in FIG. 4. FIG. 4 includes a first terminal (that is, Location Server UE), a target terminal (target UE), an anchor terminal (anchor UE), or a reference terminal (Reference UE). It should be noted that in some implementations, the Location Server UE may be an independent terminal, alternatively, the Location Server UE is the target terminal, or, the Location Server UE is the anchor terminal or the reference terminal.

The Location Server UE is a terminal that provides a location server function. The Location Server UE may be considered as a necessary role in one time of sidelink location. The location server UE receives the sidelink location request carrying location QoS or triggers a sidelink location requirement by itself, and then determines, based on the location QoS, a sidelink location method used in sidelink location, location configuration information, terminals participating in location as anchor UE, etc. In a sidelink location process, the location server UE may be a separate role (a terminal), or may be a role that are both target UE (in this case, the location server UE positions itself) or Assistant/Reference UE (for example, the location server UE assists in transmitting or measuring a sidelink positioning reference signal (sidelink Positioning Reference Signal, SL PRS)).

It should be noted that in a sidelink location process, one piece of UE may be used as the location server UE. In another sidelink location process, the UE may not be used as the location server UE, for example, only be used as anchor UE.

The target UE is a target terminal positioned, and an absolute position, a relative position, or a range (ranging) of the terminal needs to be obtained for positioning.

The anchor UE is a terminal providing positioning assistance, for example, transmitting or measuring an SL PRS. For absolute location, the anchor UE is a terminal whose location is known or a terminal whose location can be known. One or more pieces of Anchor UE may be provided, or no separate anchor UE may be provided. For example, the location server UE also plays the role of the anchor UE. The Anchor UE or may be referred to as located UE or assisting UE.

The Reference UE is a terminal for location reference during relative location or range (ranging) location. The Reference UE may be separate UE, may be one piece of anchor UE, or may be the location server UE.

It should be noted that since the location server UE may also play the role of the anchor UE, in the above architecture, in some scenarios, there may alternatively be no separate anchor UE and/or separate reference UE.

It should be noted that the location server UE may establish a sidelink unicast connection to the target UE and the anchor UE (or the reference UE) for communication. No sidelink unicast connection may be established between the target UE and the anchor UE (or the reference UE), but one party may still transmit the SL PRS through the PC5 port, and the other party may measure the SL PRS of the PC5 port.

It should be noted that in some implementations, the reference terminal may alternatively be indicated in the sidelink location request in some implementations.

In some implementations, the location server UE receives the location request carrying the location QoS and the target UE ID or triggers the location request by itself, and needs to locate the target UE or itself (that is, the location server UE is also the target UE). Then, the location server UE identifies or determines, based on information such as the location QoS, the anchor UE participating in location and determines the sidelink location method. Then, the location server UE executes sidelink location by using the sidelink positioning protocol to obtain a sidelink positioning result. Specifically, The sidelink positioning protocol message that the location server UE exchanges with the target UE and the Anchor UE includes at least one of the following: providing location assistance information (for example, for configuring measurement or transmission of the SL PRS), requesting location information, receiving a sidelink location measurement result, etc.

In the above implementation, at least one of the sidelink location method, the location configuration information, the anchor terminal participating in location, and the reference terminal participating in location can be determined based on the location QoS, in this way, configuration overheads on a network side can be reduced since the at least one may not be configured.

Optionally, the sidelink location request further includes at least one of the following:
a location type, information about a reference terminal, information about a candidate anchor terminal, and sidelink location measurement result information, where
the anchor terminal is a terminal having a known location and participating in transmitting a sidelink positioning reference signal, or, the anchor terminal is a terminal having a known location and participating in measuring a sidelink positioning reference signal;
the reference terminal is a position reference terminal for relative location or range location; and
the sidelink location measurement result information is used to assist in location of the target terminal.

The location type may be absolute location, relative location, or range location (ranging location).

The information about a reference terminal may be identification information of the reference terminal. In addition, when the location type is relative location or ranging location, the information about the reference terminal may implicitly indicate that the location type is relative location or ranging location.

The information about a candidate anchor terminal is used to assist the first terminal in selecting an anchor terminal. The information about a candidate anchor terminals may be a list used to indicate candidate anchor terminals. These candidate anchor terminals may be terminals near the target terminal, for example, terminals of which the target terminal can receive sidelink signals, for example, can receive sidelink positioning reference signals (sidelink Positioning Reference Signal, SL PRS), or terminals that are identified in a first terminal discovery process but are not selected.

The sidelink location measurement result information may be a measured sidelink location measurement result of the target terminal, for example, for a location request initiated by the target terminal, a sidelink location measurement result that has been obtained by the target terminal when the location request is initiated. A target terminal location delay may be reduced by using the sidelink location measurement result information. For example, in some implementations, the positioning result of the target terminal may be calculated directly based on the sidelink location measurement result information. Alternatively, in some implementations, a determined approximate location may be determined based on the sidelink location measurement result information, such that a more appropriate location method or location configuration information is configured accordingly, and then the sidelink location operation is executed based on a determined content.

In some implementations, the sidelink location request may carry one container (container). The container may include one SLPP message, and the message carries the sidelink location measurement result information.

In the above implementation, since the sidelink location request includes at least one of the foregoing, the first terminal does not need to additionally execute the at least one determining operation, and the sidelink positioning result of the target terminal is quickly obtained.

As an optional implementation, the sidelink location operation includes at least one of the following:
a sidelink location measurement result transmitted by the target terminal is received;
a sidelink location result transmitted by the target terminal is received;
a sidelink location measurement result transmitted by the anchor terminal is received; and
a sidelink location result transmitted by the anchor terminal is received.

The above sidelink location measurement result transmitted by the target terminal may be a sidelink location measurement result obtained by the target terminal by measuring the positioning reference signal transmitted by the anchor terminal or the reference terminal. In this case, the first terminal calculates the positioning result of the target terminal based on the sidelink location measurement result.

The sidelink location result transmitted by the target terminal may be a sidelink location result obtained by the target terminal by measuring and calculating the positioning reference signal transmitted by the anchor terminal or the reference terminal. In this case, the first terminal may directly use the sidelink location result as the positioning result of the target terminal, or, the first terminal performs calculation based on the sidelink location result to obtain the positioning result of the target terminal.

The above sidelink location measurement result transmitted by the anchor terminal may be a sidelink location measurement result obtained by the anchor terminal by measuring the positioning reference signal transmitted by the target terminal. In this case, the first terminal calculates the positioning result of the target terminal based on the sidelink location measurement result.

The sidelink location result transmitted by the anchor terminal may be a sidelink location result obtained by the anchor terminal by measuring and calculating the positioning reference signal transmitted by the target terminal. In this case, the first terminal may directly use the sidelink location result as the positioning result of the target terminal, or, the first terminal performs calculation based on the sidelink location result to obtain the positioning result of the target terminal.

It should be noted that in some implementations, the reference terminal may be the anchor terminal. Thus the sidelink location measurement result and the sidelink location result transmitted by the anchor terminal may be the sidelink location measurement result and the sidelink location result transmitted by the reference terminal.

In the implementation, at least one of the sidelink location measurement result or the sidelink location result may be determined as the positioning result of the target terminal.

Optionally, the sidelink location operation further includes at least one of the following:
a sidelink location capability of the target terminal is obtained;
a sidelink location capability of the anchor terminal is obtained;
a sidelink location configuration is transmitted to the target terminal; and
the sidelink location configuration is transmitted to the anchor terminal.

The sidelink location capability may represent a sidelink location capability possessed by the terminal. The sidelink location capability may include supporting which sidelink location methods, whether to support sidelink reference signal transmission, whether to support sidelink reference signal measurement, etc.

The sidelink location configuration may be configuration of a sidelink positioning reference signal, for example, resource configuration or power configuration.

As an optional implementation, before the first terminal executes the sidelink location operation based on the sidelink location request, the method further includes at least one of the following:
the first terminal executes a discovery process of the target terminal;
the first terminal establishes a sidelink unicast connection to the target terminal;
the first terminal executes a discovery process of the anchor terminal; and
the first terminal establishes a sidelink unicast connection to the anchor terminal.

The discovery process of the anchor terminal may be executed as follows: a terminal that may perform sidelink communication with the first terminal (by establishing a sidelink unicast connection) and that may receive the SL PRS of the target terminal or may transmit an SL PRS that may be received by the target terminal is selected, to avoid resource waste as much as possible caused by the fact that the anchor terminal transmits the SL PRS but the target terminal cannot measure it, or the target terminal transmits the SL PRS but the anchor terminal UE cannot measure it. Alternatively, an anchor terminal having a specific sidelink location capability may be selected.

In the implementation, since the first terminal establishes sidelink unicast connections with the target terminal and the anchor terminal, reliability of sidelink location can be improved.

It should be noted that in some implementations, alternatively, before the first terminal receives the sidelink location request, the first terminal has established the sidelink unicast connection to the target terminal and/or the anchor terminal.

In addition, in the implementation, at least one of the foregoing may also be included in the sidelink location operation, that is, the sidelink location operation further includes at least one of the foregoing.

As an optional implementation, the method further includes:
the first terminal transmits a first sidelink location response in a first condition, where the first sidelink location response is used to indicate a sidelink location failure; and
the first condition includes at least one of the following:
the target terminal is not discovered; and
the sidelink unicast connection to the target terminal is not successfully established, or the sidelink unicast connection to the target terminal fails to be established.

The first sidelink location response may be transmitted as follows: the first sidelink location response is transmitted to the LMF, the AMF, or the second terminal, and the first sidelink location response may be at least one of the following:
a Sidelink positioning protocol message, a PC5-S message, a PC5 RRC message, an LPP message, or an NAS message.

In some implementations, the first sidelink location response may include failure cause information of the sidelink location failure. For example, a failure cause may be that execution cannot be performed, a discovery of the target terminal fails, or a unicast connection establishment fails.

In the implementation, since the first sidelink location response is transmitted under the first condition to indicate the sidelink location failure, a process that the LMF, the AMF, or the second terminal waits for a positioning result of the target terminal is omitted, and overhead waste is avoided.

As an optional implementation, after the first terminal executes the sidelink location operation based on the sidelink location request, and obtains the positioning result of the target terminal, the method further includes one of the following:
the first terminal transmits a second sidelink location response, where the second sidelink location response is used to indicate the positioning result of the target terminal.

In the implementation, in a case that sidelink location of the target terminal succeeds, the second sidelink location response may be transmitted to the LMF, the AMF, or the second terminal, to indicate the positioning result of the target terminal. In addition, the second sidelink location response may be at least one of the following:
a Sidelink positioning protocol message, a PC5-S message, a PC5 RRC message, an LPP message, or an NAS message.

As an optional implementation, the first terminal is the target terminal; or,
the first terminal and the target terminal are different terminals, and the first terminal obtains the sidelink location request as follows:
the first terminal receives the sidelink location request transmitted by the target terminal.

In a case that the first terminal is the target terminal, the sidelink location request may be transmitted from the LMF, the AMF, or the second terminal, or may be generated by the first terminal.

In a case that the first terminal and the target terminal are different terminals, the first terminal may receive the sidelink location request transmitted by the target terminal as follows: the target terminal receives the sidelink location request transmitted by the LMF, the AMF, or the second terminal, or, the target terminal transmits the sidelink location request to the first terminal after the target terminal generates the sidelink location request.

In the implementation, the target terminal is supported in transmitting the sidelink location request, such that flexibility of sidelink location is improved.

As an optional implementation, in a case that the first terminal is the target terminal, the method further includes:
the first terminal reports capability information to the network device, where the capability information is used to represent at least one of the following:
a sidelink location capability; and
a capability of the sidelink location server function.

The capability information may be reported to the network device as follows: the capability information is transmitted to the LMF or the AMF, such that the LMF or the AMF can accurately and quickly find a terminal that provides the sidelink location server function.

Optionally, the method further includes:
the first terminal receives instruction information transmitted by the network device, where the instruction information is used to instruct the capability information to be reported.

The instruction information may be transmitted through an LPP message or an NAS message.

In the implementation, the network device may transmits the instruction information to a plurality of terminals. Each terminal reports capability information to the network device to indicate a sidelink location capability of each terminal and whether the terminal has a capability of the sidelink location server function.

In the implementation, since the capability information is reported through the above instruction information, the capability information is reported on demand, and overall overheads of the communication system are reduced.

In some other implementations, the terminal may also actively report the capability information to the network device.

In the embodiment of the present application, the first terminal obtains the sidelink location request. The sidelink location request is used to request location of a target terminal, and the first terminal is a terminal providing a sidelink location server function; and the first terminal executes the sidelink location operation based on the sidelink location request, and obtains the positioning result of the target terminal. In this way, the first terminal that provides the sidelink location server function executes the sidelink location operation based on the sidelink location request, to support sidelink location, and improve positioning performance of the terminal.

With reference to FIG. 5, FIG. 5 is a flowchart of another method for positioning according to the embodiment of the present application. As shown in FIG. 5, the method includes:
Step 501: A second terminal transmits a sidelink location request to a first terminal, where the sidelink location request is used to request location of a target terminal, and the first terminal is a terminal providing a sidelink location server function; and
the second terminal and the target terminal are a same terminal, or, the second terminal and the target terminal are different terminals.

Optionally, the sidelink location request is at least one of the following:
a Sidelink positioning protocol message, a PC5-signaling S message, and a PC5 radio resource control RRC message.

Optionally, the sidelink location request includes at least one of the following:
location quality of service QoS, and identification information of the target terminal.

Optionally, the sidelink location request further includes at least one of the following:
a location type, information about a reference terminal, information about a candidate anchor terminal, and sidelink location measurement result information, where
the anchor terminal is a terminal having a known location and participating in transmitting a sidelink positioning reference signal, or, the anchor terminal is a terminal having a known location and participating in measuring a sidelink positioning reference signal;
the reference terminal is a position reference terminal for relative location or range location; and
the sidelink location measurement result information is used to assist in location of the target terminal.

Optionally, before the second terminal transmits the sidelink location request to the first terminal, the method further includes:
the second terminal receives a fourth sidelink location request transmitted by a network device, where the fourth sidelink location request includes at least one of the following:
location QoS, information about a reference terminal, information about a candidate anchor terminal, and information about the first terminal.

In the implementation, the network device may request sidelink location from the second terminal. The second terminal transmits the sidelink location request in step 501 to the first terminal in a case that the second terminal has no sidelink location server function.

Optionally, in a case that the sidelink location request transmitted to the first terminal and the fourth sidelink location request include the location QoS, a delay requirement that the sidelink location request transmitted to the first terminal includes the location QoS is lower than a delay requirement that the fourth sidelink location request includes the location QoS.

The delay requirement that the sidelink location request transmitted to the first terminal includes the location QoS is lower than the delay requirement that the fourth sidelink location request includes the location QoS. A delay difference may be a difference between a time point at which the network device transmits the fourth sidelink location request and a time point at which the LMF receives the location request (location request). Since the network device may execute Uu-based positioning, it takes a specific time budget.

In the implementation, since the delay requirement of the sidelink location request transmitted by the second terminal is lower than the delay requirement of the received sidelink location request, it can be guaranteed that a final delay of sidelink location satisfies location requirements, such that reliability of sidelink location is improved.

Optionally, in a case that the second terminal and the target terminal are the same terminal, and the target terminal provides no location server function, the method further includes:
the second terminal determines the first terminal.

Optionally, the method further includes:
the second terminal reports capability information to the network device, where the capability information is used to represent at least one of the following:
a sidelink location capability; and
whether a capability of the sidelink location server function is provided.

Optionally, the method further includes:
the second terminal receives instruction information transmitted by the network device, where the instruction information is used to instruct the capability information to be reported.

Optionally, before the second terminal transmits the sidelink location request to the first terminal, the method further includes at least one of the following:
the second terminal establishes a sidelink unicast connection to the first terminal.

It should be noted that the embodiment is an implementation of a corresponding second terminal in the embodiment shown in FIG. 2. For a specific implementation of the embodiment, reference may be to related descriptions of the embodiment shown in FIG. 2. To avoid repeated descriptions, details are omitted in the embodiment.

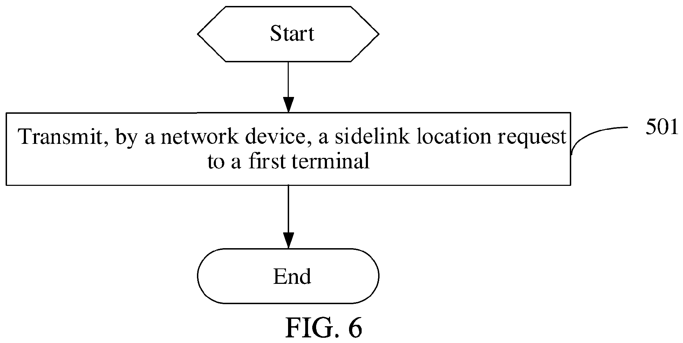

With reference to FIG. 6, FIG. 6 is a flowchart of yet another method for positioning according to the embodiment of the present application. As shown in FIG. 6, the method includes the following steps:
Step 601: A network device transmits a sidelink location request to a first terminal, where the sidelink location request is used to request location of a target terminal, the first terminal is a terminal providing a sidelink location server function, or, the first terminal is the target terminal.

Optionally, the network device is a location management function LMF, and the sidelink location request message is an LTE positioning protocol LPP message or a location services LCS message; or,
the network device is an access and mobility management function AMF, and the first sidelink location request message is a non-access stratum NAS message.

Optionally, the sidelink location request includes at least one of the following:
location quality of service QoS, and identification information of the target terminal.

Optionally, the sidelink location request further includes at least one of the following:
a location type, information about a reference terminal, information about a candidate anchor terminal, and sidelink location measurement result information, where
the anchor terminal is a terminal having a known location and participating in transmitting a sidelink positioning reference signal, or, the anchor terminal is a terminal having a known location and participating in measuring a sidelink positioning reference signal; and
the reference terminal is a position reference terminal for relative location or range location.

Optionally, the method further includes:
the network device receives a first sidelink location response transmitted by the first terminal, where the first sidelink location response indicates a first positioning result of the target terminal.

Optionally, the method further includes:
the network device receives, in a first condition, a first sidelink location response transmitted by the first terminal, where the first sidelink location response is used to indicate a sidelink location failure; and
the first condition includes at least one of the following:
the target terminal is not discovered; and
the sidelink unicast connection to the target terminal is not successfully established.

Optionally, the first sidelink location response includes failure cause information of the sidelink location failure.

Optionally, the method further includes:
the network device receives first capability information reported by the first terminal, where the first capability information is used to represent at least one of the following: a sidelink location capability; and whether a capability of the sidelink location server function is provided.

Optionally, the method further includes:
the network device transmits instruction information to the first terminal, where the instruction information is used to instruct capability information to be reported.

Optionally, the network device transmits the sidelink location request to the first terminal as follows:
the network device transmits the sidelink location request to the first terminal in a second condition; and
the second condition includes at least one of the following:
in a case that the target terminal is in an idle state, the network device fails to page the target terminal;
the network device fails in Uu-interface-based location executed for the target terminal;
positioning accuracy of a second positioning result does not satisfy a preset requirement, and the second positioning result is a positioning result of Uu-interface-based location executed by the network device for the target terminal; and
the first terminal has a capability of the sidelink location server function.

In the implementation, in a case that the network device fails to page the target terminal, sidelink location of the target terminal is initiated, sidelink location of the target terminal may be initiated in a case that Uu interface positioning fails or the positioning result of Uu interface positioning does not satisfy the preset requirement, and sidelink location of the target terminal may be initiated in a case that the first terminal has the capability of the sidelink location server function, such that the positioning performance is improved.

It should be noted that the embodiment is an implementation of a corresponding network device in the embodiment shown in FIG. 2. For a specific implementation of the embodiment, reference may be to related descriptions of the embodiment shown in FIG. 2. To avoid repeated descriptions, details are omitted in the embodiment.

The method provided in the embodiments of the present application is illustrated through a plurality of embodiments, specifically as follows:

### Embodiment 1:

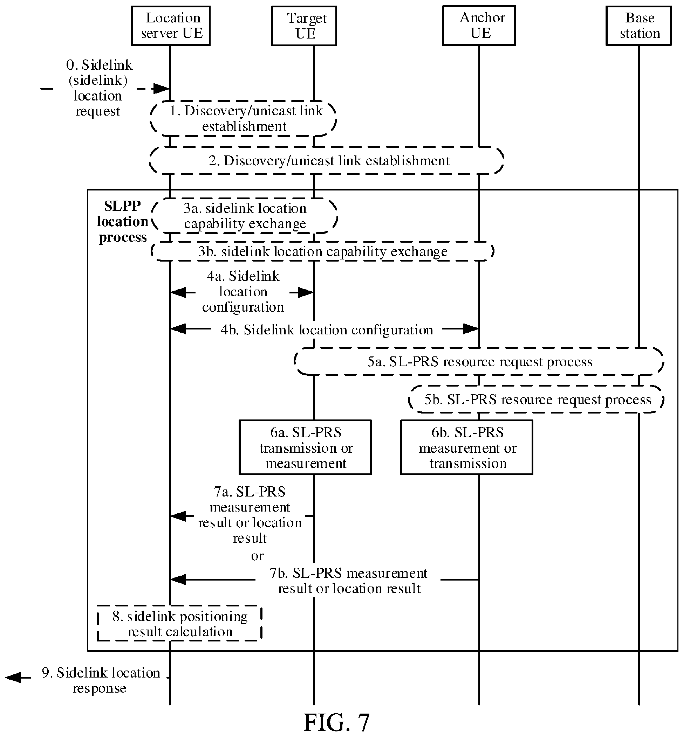

As shown in FIG. 7, the embodiment includes the following steps.

Step 0: In a case that a location request is received by a location server terminal (location server UE) or triggered by the location server UE itself, a target terminal (target UE) or the location server UE (that is, the location server UE is also the target UE) needs to be positioned, and the location request carries location QoS and a target UE ID. The location QoS may include location accuracy and a location delay. The target UE ID may be an L2 ID of the target UE, an Application UE ID, an S-TMSI, an IMSI, an SUPI, or the like.

Scenario 1: UE 1 establishes a sidelink unicast connection to the location server UE. The UE 1 transmits a location request message to the location server UE through the sidelink unicast connection. The UE 1 may be the target UE or other third-party UE. The location request message may be:
a Sidelink positioning protocol (referred to as SLPP in the embodiment for convenience of description) message;
a PC5-S message; and
a PC5 RRC message.

Scenario 2: The location server UE receives a location request transmitted by an LMF. The location request may be an LCS message or an LPP message. For example, a message is introduced in an LPP protocol and is used for the LMF to transmit the location request to the location server UE, to request the location server UE to execute sidelink location on the target UE.

Scenario 3: The location server UE receives a location request transmitted by an AMF. The location request may be an NAS message. That is, a message is introduced in an NAS protocol and is used for the AMF to transmit the location request to the location server UE, to request the location server UE to execute sidelink location on the target UE.

In addition to carrying the location QoS and the target UE ID, the location request message may further include any combination of the following:
a location type, where the location type may include, for example, absolute location and relative location/ranging location;
reference terminal (Reference UE) information (when the location type is relative location/ranging location), where alternatively, the information may implicitly indicate that the location type is relative location/ranging location;
candidate anchor terminal (anchor UE) information indicating a list of candidate anchor UE, where these UE may be UE (for example, UE whose sidelink signal (for example, an SL PRS signal) may be received by the target UE, or UE that is identified in a discovery process of the location server UE but is not selected) near the target UE, and the list is used to assist the location server UE in selecting anchor UE; and
sidelink location measurement result information (for example, a location request initiated by the target UE, and a sidelink location measurement result that has been obtained by the target UE when initiating the location request), to reduce a location delay. Optionally, the location request message may carry one container (container). The container may include one SLPP message, and the message carries the sidelink location measurement result information.

Step 1 (optional step): In a case that the location server UE establishes no sidelink unicast connection to the target UE (which may occur, for example, in a scenario where a request for positioning the target UE is initiated by third-party UE, an LMF, or an AMF), the location server UE executes a discovery process of the target UE and/or a sidelink unicast connection establishment process. Specifically, the following solutions may be provided:

Solution 1: The location server UE transmits a PC5-discovery (discovery, D) message to discover the target UE, for example, transmits a direct discovery request (direct discovery solicitation) message to discover the target UE.

Solution 2: The location server UE transmits a PC5-S message, for example, a direct link establishment request (Direct link establishment request). The message carries the UE ID of the target UE. Specifically, In a case that the UE ID of the target UE is the SL layer 2 ID, the target layer 2 ID corresponding to the message uses the SL layer 2 ID of the target UE (that is, upper 8 bits of the SL layer 2 ID are carried in a subheader of an SL MAC PDU corresponding to the message, and lower 16 bits of the SL layer 2 ID are carried in SCI corresponding to the message). Alternatively, the target UE ID is carried in an information element of the message. The target layer 2 ID corresponding to the message uses a layer 2 ID corresponding to a sidelink location service.

Solution 3: An SLPP message is introduced in the SLPP protocol. The SLPP message is used to discover the target UE and/or establish a sidelink unicast connection to the target UE. In case of the introduced SLPP message, the SLPP message may support a plurality of target UE ID types to support the above scenarios.

In a case that the location server UE discovers no target UE or fails to establish a sidelink unicast connection to the target UE, the location server UE replies to a location response message or a location failure message. The location response message or the location failure message may include a failure cause. The failure cause may be that execution cannot be performed, a discovery of the target UE fails, or a unicast connection establishment fails. The process ends.

Step 2 (optional step): The location server UE discovers/determines, according to information such as location QoS, anchor UE participating in location. For example, UE that may perform sidelink communication with the location server UE (by establishing a sidelink unicast connection) and that may receive the SL PRS of the target UE or may transmit an SL PRS that may be received by the target UE is selected, to avoid resource waste as much as possible (the fact that the anchor UE transmits the SL PRS but the target UE cannot measure it, or the target UE transmits the SL PRS but the anchor UE cannot measure it is avoided as much as possible). For another example, anchor UE whose sidelink location capability matches location QoS is selected.

A process of discovering or establishing a sidelink unicast connection is similar to step 1, except that no target UE ID is included in a corresponding message, and instead, a screening condition of the anchor UE may be included. The screening condition may be anchor UE that reaches a specific sidelink location capability.

Optionally, in a case that the candidate anchor UE information is carried in step 1, the location server UE selects anchor UE from the candidate anchor UE or preferentially selects the candidate anchor UE.

In subsequent steps, the location server UE executes an SLPP location process. Specifically, for example, a location server exchanges a sidelink location capability with the target UE and/or the anchor UE (that is, the location server UE obtains the sidelink location capability of the target UE and/or the anchor UE from the target UE and/or the anchor UE), determines a sidelink location method and a sidelink location configuration (location assistance information) based on the location QoS, and transmits the sidelink location configuration to the target UE and the anchor UE. Optionally, the target UE and/or the anchor UE request an SL PRS resource from a base station. The target UE and the anchor UE transmit or measure the SL-PRS, and report a measurement result or a location result to the location server UE. In a case of the measurement result, the location server UE calculates the location result based on the measurement result, and returns the location result to an initiator of the location request by carrying the location result in a location response message. The location response message and the location request message are messages on a same protocol layer. For example, in a case that the location request message is an SLPP message, the location response message is an SLPP message. In a case that the location request message is a PC5-S message, the location response message is a PC5-S message, and the like. The location response message may be at least one of the following:
a Sidelink positioning protocol message, a PC5-S message, a PC5 RRC message, an LPP message, or an NAS message.

### Embodiment 2

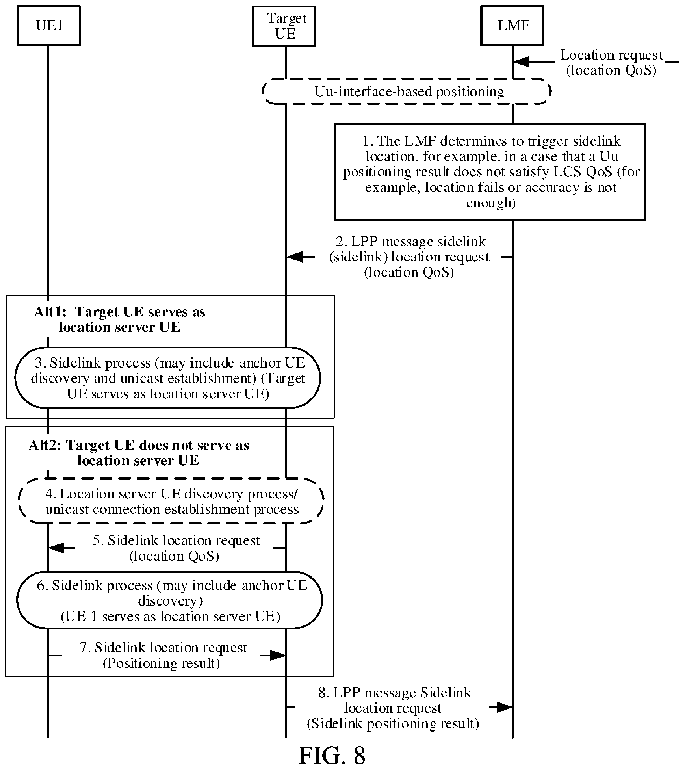

In the embodiment, a sidelink location request (sidelink location request) triggered by an LMF is used as an example for description. A sidelink location process triggered by the LMF mainly includes: The LMF determines to trigger sidelink location, and the LMF transmits a location request message to target UE. The location request message may be an LPP message. The message carries location QoS. The target UE serves as location server UE (in a case that the target UE has the capability of serving as the location server UE) to perform sidelink location on itself. Alternatively, the target UE finds location server UE, and transmits the sidelink location request (the location request carries QoS) to the location server UE to request the location server UE to locate the target UE. In the embodiment, the LMF only provides the QoS for sidelink location. A specific sidelink location method, a sidelink location configuration, etc. are determined by the Location server UE. As shown in FIG. 8, the method includes the following steps:
Step 1: The LMF receives a location request (location request) for the target UE (from an AMF). The location request carries location QoS. The location QoS includes an accuracy requirement and a location delay requirement. The LMF determines to trigger sidelink location for the target UE. For example, after the LMF executes Uu-based positioning, in a case that a positioning result does not satisfy a location QoS requirement (for example, location fails or accuracy is not enough), the LMF determines to trigger sidelink location for the target UE.
Step 2: The LMF transmits an LPP message, for example, a sidelink location request, to the target UE, where the message carries the location QoS. The LPP message is an LPP message (referred to as a sidelink location request herein) introduced in an LPP protocol, and is used by the LMF to request sidelink-location-based location information of the UE from the UE. In this case, the LMF merely serves as a location client side (location client), and a function of a location server is implemented by the terminal, such that a degree of coupling between sidelink location and Uu positioning can be reduced, and protocol complexity can be reduced.

Optionally, the sidelink location request message may further carry candidate anchor UE information, location server UE information, etc., to assist in determining the location server UE or anchor UE for this sidelink location.

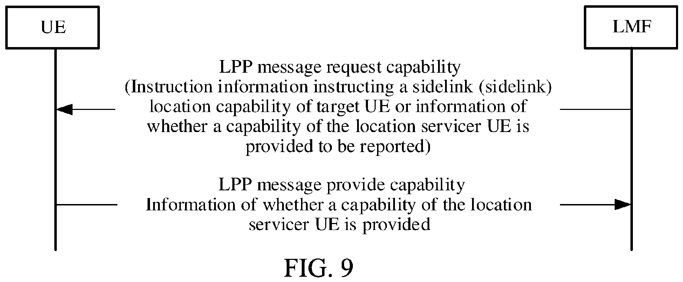

Optionally, in a case that the target UE has the location server UE capability, the LMF transmits the sidelink location request message to the target UE. That is, only the following solution alt 1 in FIG. 8 is supported (since solution alt 2 has a longer location delay and may not satisfy the location delay requirement). The LMF may obtain, in a Uu-interface-based positioning process, whether the target UE has the capability of the location server UE. For example, the target UE carries, in a Provide Capabilities message of an LPP message, information of whether the target UE has the capability of the location server UE. Optionally, the LMF carries, in a Request Capabilities message of the LPP message, instruction information to instruct the sidelink location capability of the target UE or information of whether the target UE has the capability of the location server UE to be reported. A specific process is shown in FIG. 9.

Optionally, the location QoS in the sidelink location request may be different from the location QoS in the location request received by the LMF in step 1. For example, the delay requirement in the location QoS in step 2 is obtained by subtracting a value from the delay requirement of the location QoS in step 1. The value may be a difference between a time point at which the LMF transmits the sidelink location request and a time point at which the LMF receives the location request. Since the LMF may execute Uu-based positioning, it takes a specific time budget.

Step 3 (Alt 1): After the target UE receives the sidelink location request message from the LMF, the target UE serves as the location server UE to execute a sidelink location process and obtains a sidelink positioning result of the target UE. The process may include processes of an anchor UE discovery and/or unicast establishment with the anchor UE. For details, reference is made to related description of Embodiment 1, and details are omitted herein.

It should be noted that in alt1, the UE 1 in the figure serves as anchor UE, and may be one piece of anchor UE, or may be a plurality of pieces of anchor UE.

Then step 8 is executed.

Step 4 (Alt 2): After receiving the sidelink location request message from the LMF, the Target UE determines that the Target UE does not serve as the location server UE (for example, the Target UE does not have the capability of the location server UE). The Target UE determines the location server UE. In a case that the target UE has not established a sidelink unicast connection to the location server UE, the sidelink unicast connection to the location server UE is established. Optionally, the action of determining the location server UE by the Target UE may include a discovery process and a selection process for the location server UE.

Steps 5 and 6: The Target UE transmits the sidelink location request message to the location server UE to request location of the target UE. The Location server UE executes the sidelink location process to obtain the positioning result of the target UE. For details, reference is made to Embodiment 1.

It should be noted that in alt 2, the UE 1 in the figure serves as the location server UE, but the anchor UE is not listed, and one or more pieces of anchor UE may be provided.

Step 7: The Location server UE transmits a sidelink location response message to the target UE, where the message carries the sidelink positioning result of the target UE.

Step 8: The target UE transmits a sidelink location response message of the LPP message to the LMF, where the message carries the sidelink positioning result of the target UE. Then, the LMF transmits a location response message to the AMF, carrying the positioning result.

### Embodiment 3:

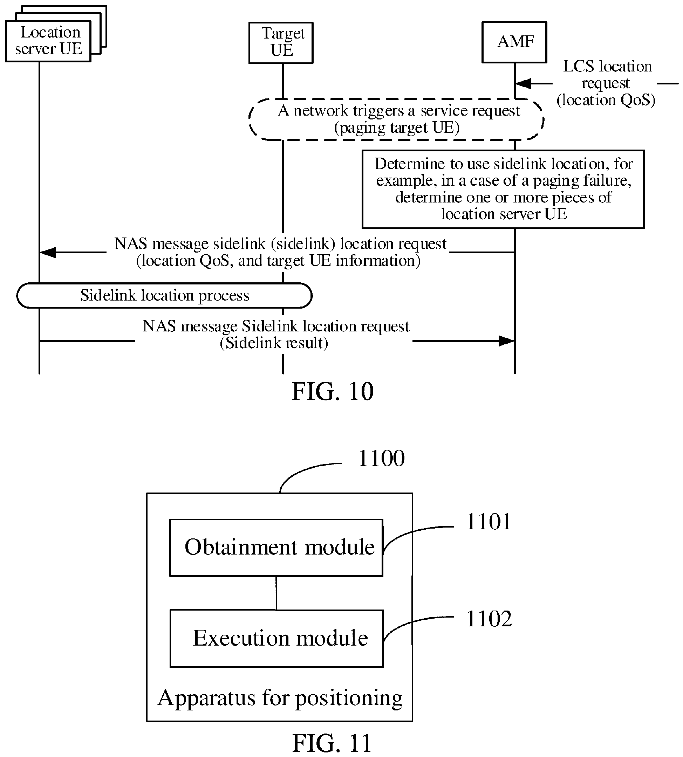

In the embodiment, a sidelink location request (sidelink location request) triggered by an AMF is mainly described. In the embodiment, a sidelink location process triggered by the AMF is shown in FIG. 10, and mainly includes:

The AMF determines to trigger sidelink location (for example, target UE is in an idle state, and the AMF fails to page the target UE, and cannot execute Uu-interface-based location). The AMF transmits a sidelink location request message to one or more pieces of UE (for example, location server UE). The location request message may be an NAS message. The message carries location QoS and a target UE ID. The UE that receives the sidelink location request message execute sidelink location on the target UE to obtain a sidelink positioning result, and then the UE transmits a NAS message sidelink location response to the AMF, carrying the sidelink positioning result. For a specific sidelink location process, reference may be made to Embodiment 1.

In the embodiment of the present application, PC5-interface-based location may be implemented as follows:
the location server UE receives the location request carrying the location QoS and the target UE ID or triggers the location request by itself, and needs to locate the target UE or itself. Then, the location server UE identifies/determines, based on information such as the location QoS, the anchor UE participating in location and determines the method for positioning. Then, the location server UE executes sidelink location by using the sidelink positioning protocol to obtain a sidelink positioning result.

The Location server UE receives a location request message transmitted by another piece of UE through a sidelink unicast connection. The location request message may be a Sidelink positioning protocol message, a PC5-S message, or a PC5 RRC message.

The Location server UE receives a location request transmitted by an LMF (for example, when a Uu-based positioning result does not satisfy the location QoS), where the location request may be an LPP message.

The UE carries, in a Provide Capabilities message of the LPP message, information of whether a capability of the location server UE is provided.

The LMF carries, in a Request Capabilities message of the LPP message, instruction information to instruct the sidelink location capability of the target UE or information of whether the target UE has the capability of the location server UE to be reported.

The location server UE receives a location request transmitted by the AMF (for example, when the AMF fails to page the target UE), where the location request may be an NAS message.

In addition to carrying the location QoS and the target UE ID, the location request message may further include any combination of the following: a location type, information about reference UE, information about candidate anchor UE, and sidelink location measurement result information.

The location server UE executes a discovery process of the target UE and/or a sidelink unicast connection establishment process. In a case that the location server UE discovers no target UE or fails to establish a sidelink unicast connection to the target UE, the location server UE replies to a location response message. The location response message may include a failure cause. The failure cause may be that a discovery fails, or a unicast connection establishment fails.

A complete set of sidelink location architecture and procedure is disclosed in the embodiments of the present application, such that sidelink location can be adapted to various location scenarios.

With reference to FIG. 11, FIG. 11 is a structural diagram of an apparatus for positioning according to the embodiment of the present application. As shown in FIG. 11, the apparatus 1100 for positioning includes:
an obtainment module 1101 used to obtain a sidelink location request, where the sidelink location request is used to request location of a target terminal, and a first terminal is a terminal providing a sidelink location server function; and
an execution module 1102 used to execute a sidelink location operation based on the sidelink location request, and obtain a positioning result of the target terminal.

The apparatus corresponds to the first terminal, or, the first terminal includes the apparatus.

Optionally, the obtainment module 1101 is used to execute one of the following step:
a first sidelink location request is received from a network device;
a second sidelink location request is received from a second terminal through a sidelink unicast connection; and
a third sidelink location request is generated.

Optionally, the network device is a location management function LMF, and the first sidelink location request message is an LTE positioning protocol LPP message or a location services LCS message; alternatively,
the network device is an access and mobility management function AMF, and the first sidelink location request message is a non-access stratum NAS message; or,
the second sidelink location request is at least one of the following:
a Sidelink positioning protocol message, a PC5-signaling S message, and a PC5 radio resource control RRC message.

Optionally, the sidelink location request includes at least one of the following:
location quality of service QoS, and identification information of the target terminal.

Optionally, the apparatus further includes:
a determining module used to determine, based on the location QoS, at least one of the following:
a sidelink location method, location configuration information, an anchor terminal participating in location, and a reference terminal participating in location, where
the anchor terminal is a terminal having a known location and participating in transmitting a sidelink positioning reference signal, or, the anchor terminal is a terminal having a known location and participating in measuring a sidelink positioning reference signal; and
the reference terminal is a position reference terminal for relative location or range location.

Optionally, the sidelink location request further includes at least one of the following:
a location type, information about a reference terminal, information about a candidate anchor terminal, and sidelink location measurement result information, where
the anchor terminal is a terminal having a known location and participating in transmitting a sidelink positioning reference signal, or, the anchor terminal is a terminal having a known location and participating in measuring a sidelink positioning reference signal;
the reference terminal is a position reference terminal for relative location or range location; and
the sidelink location measurement result information is used to assist in location of the target terminal.

Optionally, the sidelink location operation includes at least one of the following:
a sidelink location measurement result transmitted by the target terminal is received;
a sidelink location result transmitted by the target terminal is received;
a sidelink location measurement result transmitted by the anchor terminal is received; and
a sidelink location result transmitted by the anchor terminal is received.

Optionally, the sidelink location operation further includes at least one of the following:
a sidelink location capability of the target terminal is obtained;
a sidelink location capability of the anchor terminal is obtained;
a sidelink location configuration is transmitted to the target terminal; and
the sidelink location configuration is transmitted to the anchor terminal.

Optionally, the apparatus further includes at least one of the following:
a first execution module used to execute a discovery process of the target terminal;
a first establishment module used to establish a sidelink unicast connection to the target terminal;
a second execution module used to execute a discovery process of the anchor terminal; and
a second establishment module used to establish a sidelink unicast connection to the anchor terminal.

Optionally, the apparatus further includes at least one of the following:
a first transmission module used to transmit a first sidelink location response in a first condition, where the first sidelink location response is used to indicate a sidelink location failure; and
the first condition includes at least one of the following:
the target terminal is not discovered; and
the sidelink unicast connection to the target terminal is not successfully established.

Optionally, the first sidelink location response includes failure cause information of the sidelink location failure.

Optionally, the apparatus further includes:
a second transmission module used to transmit a second sidelink location response, where the second sidelink location response is used to indicate the positioning result of the target terminal.

Optionally, the first terminal is the target terminal; and
alternatively,
the first terminal and the target terminal are different terminals, and the first terminal obtains the sidelink location request as follows:
   the first terminal receives the sidelink location request transmitted by the target terminal.

Optionally, in a case that the first terminal is the target terminal, the apparatus further includes:
a reporting module used to report capability information to the network device, where the capability information is used to represent at least one of the following:
a sidelink location capability; and
a capability of the sidelink location server function.

Optionally, the apparatus further includes:
a reception module used to receive instruction information transmitted by the network device, where the instruction information is used to instruct the capability information to be reported.

The apparatus for positioning can improve the positioning performance of the terminal.

The apparatus for positioning in the embodiment of the present application may be an electronic device, for example, an electronic device with an operating system, or may be a component in an electronic device, for example, an integrated circuit or a chip. The electronic device may be a terminal, or may be another device other than a terminal. For example, the terminal may include, but is not limited to, the terminals of types listed in the embodiments of the present application. The another device may be a server, a network attached storage (Network Attached Storage, NAS), or the like. This is not specifically limited in the embodiments of the present application.

The apparatus for positioning according to the embodiment of the present application may implement each process implemented by the method embodiment shown in FIG. 2, and achieve the same technical effect. To avoid repetition, details are omitted herein.

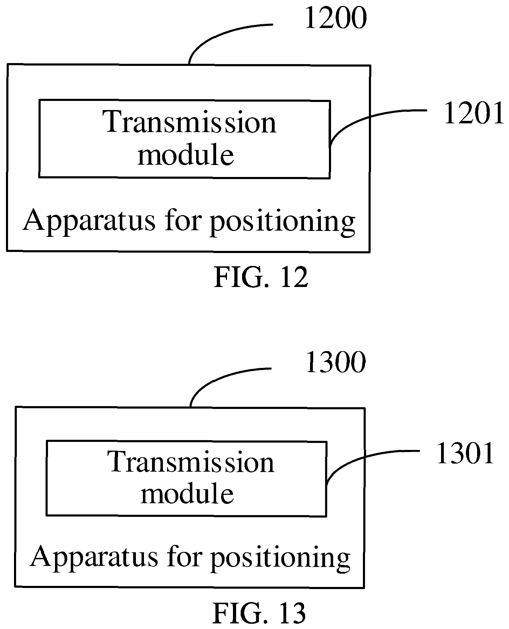

With reference to FIG. 12, FIG. 12 is a structural diagram of another apparatus for positioning according to the embodiment of the present application. As shown in FIG. 12, the apparatus 1200 for positioning includes:
a transmission module 1201 used to transmit a sidelink location request to a first terminal, where the sidelink location request is used to request location of a target terminal, and the first terminal is a terminal providing a sidelink location server function; and
a second terminal and the target terminal are a same terminal, or, a second terminal and the target terminal are different terminals.

The apparatus corresponds to the second terminal, or, the second terminal includes the apparatus.

Optionally, the sidelink location request is at least one of the following:
a Sidelink positioning protocol message, a PC5-signaling S message, and a PC5 radio resource control RRC message.

Optionally, the sidelink location request includes at least one of the following:
location quality of service QoS, and identification information of the target terminal.

Optionally, the sidelink location request further includes at least one of the following:
a location type, information about a reference terminal, information about a candidate anchor terminal, and sidelink location measurement result information, where
the anchor terminal is a terminal having a known location and participating in transmitting a sidelink positioning reference signal, or, the anchor terminal is a terminal having a known location and participating in measuring a sidelink positioning reference signal;
the reference terminal is a position reference terminal for relative location or range location; and
the sidelink location measurement result information is used to assist in location of the target terminal.

Optionally, the apparatus further includes:
a first reception module used to receive a fourth sidelink location request transmitted by a network device, where the fourth sidelink location request includes at least one of the following:
location QoS, information about a reference terminal, information about a candidate anchor terminal, and information about the first terminal.

Optionally, in a case that the sidelink location request transmitted to the first terminal and the fourth sidelink location request include the location QoS, a delay requirement that the sidelink location request transmitted to the first terminal includes the location QoS is lower than a delay requirement that the fourth sidelink location request includes the location QoS.

Optionally, in a case that the second terminal and the target terminal are the same terminal, and the target terminal provides no location server function, the apparatus further includes:
a determining module used to determine the first terminal.

Optionally, the apparatus further includes:
a reporting module used to report capability information to the network device, where the capability information is used to represent at least one of the following:
a sidelink location capability; and
whether a capability of the sidelink location server function is provided.

Optionally, the apparatus further includes:
a second reception module used to receive instruction information transmitted by the network device, where the instruction information is used to instruct the capability information to be reported.

Optionally, the apparatus further includes:
an establishment module used to establish a sidelink unicast connection to the first terminal.

The apparatus for positioning can improve the positioning performance of the terminal.

The apparatus for positioning in the embodiment of the present application may be an electronic device, for example, an electronic device with an operating system, or may be a component in an electronic device, for example, an integrated circuit or a chip. The electronic device may be a terminal, or may be another device other than a terminal. For example, the terminal may include, but is not limited to, the terminals of types listed in the embodiments of the present application. The another device may be a server, a network attached storage (Network Attached Storage, NAS), or the like. This is not specifically limited in the embodiments of the present application.

The apparatus for positioning according to the embodiment of the present application may implement each process implemented by the method embodiment shown in FIG. 5, and achieve the same technical effect. To avoid repetition, details are omitted herein.

With reference to FIG. 13, FIG. 13 is a structural diagram of another apparatus for positioning according to the embodiment of the present application. As shown in FIG. 13, the apparatus 1300 for positioning includes:
a first transmission module 1301 used to transmit a sidelink location request to a first terminal, where the sidelink location request is used to request location of a target terminal, the first terminal is a terminal providing a sidelink location server function, or, the first terminal is the target terminal.

The apparatus corresponds to the network device, or, the network device includes the apparatus.

Optionally, the network device is a location management function LMF, and the sidelink location request message is an LTE positioning protocol LPP message or a location services LCS message; or,
the network device is an access and mobility management function AMF, and the first sidelink location request message is a non-access stratum NAS message.

Optionally, the sidelink location request includes at least one of the following:
location quality of service QoS, and identification information of the target terminal.

Optionally, the sidelink location request further includes at least one of the following:
a sidelink location method, information about a reference terminal, information about a candidate anchor terminal, and sidelink location measurement result information, where
the anchor terminal is a terminal having a known location and participating in transmitting a sidelink positioning reference signal, or, the anchor terminal is a terminal having a known location and participating in measuring a sidelink positioning reference signal; and
the reference terminal is a position reference terminal for relative location or range location.

Optionally, the apparatus further includes:
a first reception module used to receive a first sidelink location response transmitted by the first terminal, where the first sidelink location response indicates a first positioning result of the target terminal.

Optionally, the apparatus further includes:
a second reception module used to receive in a first condition, a first sidelink location response transmitted by the first terminal, where the first sidelink location response is used to indicate a sidelink location failure; and
the first condition includes at least one of the following:
   the target terminal is not discovered; and
   the sidelink unicast connection to the target terminal is not successfully established.

Optionally, the first sidelink location response includes failure cause information of the sidelink location failure.

Optionally, the apparatus further includes:
a third reception module used to receive first capability information reported by the first terminal, where the first capability information is used to represent at least one of the following: a sidelink location capability; and whether a capability of the sidelink location server function is provided.

Optionally, the apparatus further includes:
a second transmission module used to transmit instruction information to the first terminal, where the instruction information is used to instruct capability information to be reported.

Optionally, the network device transmits the sidelink location request to the first terminal as follows:
the network device transmits the sidelink location request to the first terminal in a second condition; and
the second condition includes at least one of the following:
   in a case that the target terminal is in an idle state, the network device fails to page the target terminal;
   the network device fails in Uu-interface-based location executed for the target terminal;
   positioning accuracy of a second positioning result does not satisfy a preset requirement, and the second positioning result is a positioning result of Uu-interface-based location executed by the network device for the target terminal; and
   the first terminal has a capability of the sidelink location server function.

The apparatus for positioning can improve the positioning performance of the terminal.

A data packet processing apparatus in the embodiment of the present application may be an electronic device, for example, an electronic device with an operating system, or may be a component in an electronic device, for example, an integrated circuit or a chip. The electronic device may be a network device.

The data packet processing apparatus according to the embodiment of the present application may implement each process implemented by the method embodiment shown in FIG. 5, and achieve the same technical effect. To avoid repetition, details are omitted herein.

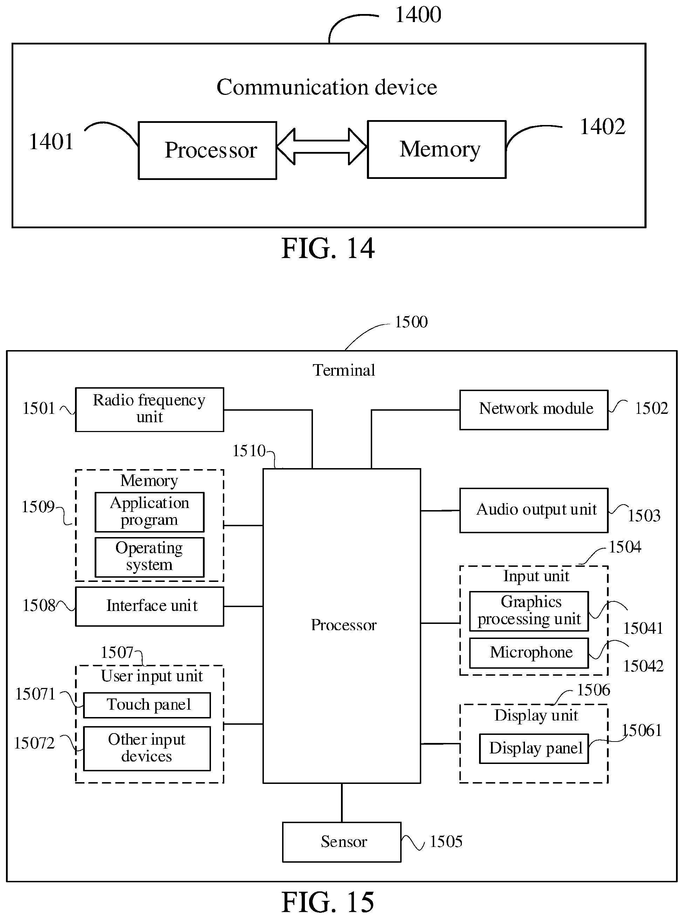

Optionally, as shown in FIG. 14, the embodiments of the present application further provide a communication device 1400. The communication device includes a processor 1401 and a memory 1402. The memory 1402 stores a program or an instruction runnable on the processor 1401. For example, when the communication device 1400 is a first terminal, when executed by the processor 1401, the program or the instruction implements steps of the embodiment of the method for positioning on a first terminal side, and can achieve the same technical effect. When the communication device 1400 is a second terminal, when executed by the processor 1401, the program or the instruction implements steps of the embodiment of the method for positioning on a second terminal side, and can achieve the same technical effect. When the communication device 1400 is a network device, when executed by the processor 1401, the program or the instruction implements steps of the embodiment of the data packet processing method on a network device side, and can achieve the same technical effect. To avoid repetition, details are omitted herein.

The embodiments of the present application further provide a terminal. The terminal includes a processor and a communication interface. In a case that the terminal is a first terminal, the processor or the communication interface is used to obtain a sidelink location request, where the sidelink location request is used to request location of a target terminal, and a first terminal is a terminal providing a sidelink location server function; and the communication interface is used to execute a sidelink location operation based on the sidelink location request, and obtain a positioning result of the target terminal. In a case that the terminal is a second terminal, the communication interface is used to transmit a sidelink location request to a first terminal, where the sidelink location request is used to request location of a target terminal, and the first terminal is a terminal providing a sidelink location server function; and the second terminal and the target terminal are a same terminal, or, the second terminal and the target terminal are different terminals.

The terminal embodiment corresponds to the above terminal side method embodiment. Implementation processes and implementations of the above method embodiment are all applicable to the terminal embodiment, and the same technical effects can be achieved. Specifically, FIG. 15 is a schematic structural diagram of hardware of a terminal according to the embodiment of the present application.

The terminal 1500 includes, but is not limited to: at least some components of a radio frequency unit 1501, a network module 1502, an audio output unit 1503, an input unit 1504, a sensor 1505, a display unit 1506, a user input unit 1507, an interface unit 1508, a memory 1509, a processor 1510, etc.

Those skilled in the art may appreciate that the terminal 1500 may further include a power supply (such as a battery) for supplying power to the components. The power supply may be logically connected to the processor 1510 by a power management system, thereby implementing functions such as charging, discharging, and power consumption management by using the power management system. A terminal structure shown in FIG. 15 does not constitute a limitation on the terminal, and the terminal may include more or fewer components than shown, or combine some components, or have different component arrangements, which are not described herein in detail.

It should be understood that in the embodiment of the present application, the input unit 1504 may include a graphics processing unit (Graphics Processing Unit, GPU) 15041 and a microphone 15042. The graphics processing unit 15041 performs processing on image data of a static picture or a video that is obtained by an image capture device (for example, a camera) in a video capture mode or an image capture mode. The display unit 1506 may include a display panel 15061. The display panel 15061 may be configured in a form of a liquid crystal display, an organic light-emitting, etc. The user input unit 1507 includes at least one of a touch panel 15071 and another input device 15072. The touch panel 15071 is also referred to as a touchscreen. The touch panel 15071 may include two parts of a touch detection apparatus and a touch controller. The another input device 15072 may include, but not limited to, a physical keyboard, a functional key (such as a volume control key or a switch key), a track ball, a mouse, and a joystick, which are not described herein in detail.

In the embodiment of the present application, after receiving downlink data from a network device, the radio frequency unit 1501 may transmit the downlink data to the processor 1510 for processing. In addition, the radio frequency unit 1501 may transmit uplink data to the network device. Generally, the radio frequency unit 1501 includes, but is not limited to, an antenna, an amplifier, a transceiver, a coupler, a low noise amplifier, a duplexer, etc.

The memory 1509 may be used to store a software program and various data. The memory 1509 may mainly include a first storage area for storing a program or an instruction, and a second storage area for storing data. The first storage area may store an operating system, an application program or an instruction required by at least one function (for example, a sound playback function and an image display function), etc. Moreover, the memory 1509 may include a volatile memory or a non-volatile memory, or, the memory 1509 may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 1509 in the embodiment of the present application includes, but is not limited to, these memories and any other suitable types of memories.

The processor 1510 may include one or more processing units. Optionally, the processor 1510 may integrate an application processor and a modem processor, where the application processor mainly processes operations involving an operating system, a user interface, an application program, etc., and the modem processor mainly processes a wireless communication signal, for example, a baseband processor. It can be understood that the modem processor may not be integrated into the processor 1510.

In a case that the terminal is a first terminal,
the processor 1510 or the radio frequency unit 1501 is used to obtain a sidelink location request, where the sidelink location request is used to request location of a target terminal, and a first terminal is a terminal providing a sidelink location server function; and
the processor 1510 or the radio frequency unit 1501 is used to execute a sidelink location operation based on the sidelink location request and obtain a positioning result of the target terminal.

Optionally, the sidelink location request is obtained as one of the following:
a first sidelink location request is received from a network device;
a second sidelink location request is received from a second terminal through a sidelink unicast connection; and
a third sidelink location request is generated.

Optionally, the network device is a location management function LMF, and the first sidelink location request message is an LTE positioning protocol LPP message or a location services LCS message; alternatively,
the network device is an access and mobility management function AMF, and the first sidelink location request message is a non-access stratum NAS message; or,
the second sidelink location request is at least one of the following:
   a Sidelink positioning protocol message, a PC5-signaling S message, and a PC5 radio resource control RRC message.

Optionally, the sidelink location request includes at least one of the following:
location quality of service QoS, and identification information of the target terminal.

Optionally, the processor 1510 is further used to:
determine, based on the location QoS, at least one of the following:
a sidelink location method, location configuration information, an anchor terminal participating in location, and a reference terminal participating in location, where
the anchor terminal is a terminal having a known location and participating in transmitting a sidelink positioning reference signal, or, the anchor terminal is a terminal having a known location and participating in measuring a sidelink positioning reference signal; and
the reference terminal is a position reference terminal for relative location or range location.

Optionally, the sidelink location request further includes at least one of the following:
a location type, information about a reference terminal, information about a candidate anchor terminal, and sidelink location measurement result information, where
the anchor terminal is a terminal having a known location and participating in transmitting a sidelink positioning reference signal, or, the anchor terminal is a terminal having a known location and participating in measuring a sidelink positioning reference signal;
the reference terminal is a position reference terminal for relative location or range location; and
the sidelink location measurement result information is used to assist in location of the target terminal.

Optionally, the sidelink location operation includes at least one of the following:
a sidelink location measurement result transmitted by the target terminal is received;
a sidelink location result transmitted by the target terminal is received;
a sidelink location measurement result transmitted by the anchor terminal is received; and
a sidelink location result transmitted by the anchor terminal is received.

Optionally, the sidelink location operation further includes at least one of the following:
a sidelink location capability of the target terminal is obtained;
a sidelink location capability of the anchor terminal is obtained;
a sidelink location configuration is transmitted to the target terminal; and
the sidelink location configuration is transmitted to the anchor terminal.

Optionally, before the first terminal executes the sidelink location operation based on the sidelink location request, the radio frequency unit 1501 is further used to perform at least one of the following steps:
a discovery process of the target terminal is executed;
a sidelink unicast connection to the target terminal is established;
a discovery process of the anchor terminal is executed; and
a sidelink unicast connection to the anchor terminal is established.

Optionally, the radio frequency unit 1501 is further used to:
transmit a first sidelink location response in a first condition, where the first sidelink location response is used to indicate a sidelink location failure; and
the first condition includes at least one of the following:
   the target terminal is not discovered; and
   the sidelink unicast connection to the target terminal is not successfully established.

Optionally, the first sidelink location response includes failure cause information of the sidelink location failure.

Optionally, the first terminal executes the sidelink location operation based on the sidelink location request, and obtains the positioning result of the target terminal, the radio frequency unit 1501 is further used to:
transmit a second sidelink location response, where the second sidelink location response is used to indicate the positioning result of the target terminal.

Optionally, the first terminal is the target terminal; and
alternatively,
the first terminal and the target terminal are different terminals, and the first terminal obtains the sidelink location request as follows:
   the first terminal receives the sidelink location request transmitted by the target terminal.

Optionally, in a case that the first terminal is the target terminal, the radio frequency unit 1501 is further used to:
report capability information to the network device, where the capability information is used to represent at least one of the following:
a sidelink location capability; and
a capability of the sidelink location server function.

Optionally, the radio frequency unit 1501 is further used to execute the step:
the first terminal receives instruction information transmitted by the network device, where the instruction information is used to instruct the capability information to be reported.

In a case that the terminal is a second terminal,
the radio frequency unit 1501 is used to transmit a sidelink location request to a first terminal, where the sidelink location request is used to request location of a target terminal, and the first terminal is a terminal providing a sidelink location server function; and
the second terminal and the target terminal are a same terminal, or, the second terminal and the target terminal are different terminals.

Optionally, the sidelink location request is at least one of the following:
a Sidelink positioning protocol message, a PC5-signaling S message, and a PC5 radio resource control RRC message.

Optionally, the sidelink location request includes at least one of the following:
location quality of service QoS, and identification information of the target terminal.

Optionally, the sidelink location request further includes at least one of the following:
a location type, information about a reference terminal, information about a candidate anchor terminal, and sidelink location measurement result information, where
the anchor terminal is a terminal having a known location and participating in transmitting a sidelink positioning reference signal, or, the anchor terminal is a terminal having a known location and participating in measuring a sidelink positioning reference signal;
the reference terminal is a position reference terminal for relative location or range location; and
the sidelink location measurement result information is used to assist in location of the target terminal.

Optionally, before the second terminal transmits the sidelink location request to the first terminal, the radio frequency unit 1501 is further used to:
receive a fourth sidelink location request transmitted by a network device, where the fourth sidelink location request includes at least one of the following:
location QoS, information about a reference terminal, information about a candidate anchor terminal, and information about the first terminal.

Optionally, in a case that the sidelink location request transmitted to the first terminal and the fourth sidelink location request include the location QoS, a delay requirement that the sidelink location request transmitted to the first terminal includes the location QoS is lower than a delay requirement that the fourth sidelink location request includes the location QoS.

Optionally, in a case that the second terminal and the target terminal are the same terminal, and the target terminal provides no location server function, the processor 1510 or the radio frequency unit 1501 is further used to:
determine the first terminal.

Optionally, the radio frequency unit 1501 is further used to:
report capability information to the network device, where the capability information is used to represent at least one of the following:
a sidelink location capability; and
whether a capability of the sidelink location server function is provided.

Optionally, the radio frequency unit 1501 is further used to:
receive instruction information transmitted by the network device, where the instruction information is used to instruct the capability information to be reported.

Optionally, before the second terminal transmits the sidelink location request to the first terminal, the radio frequency unit 1501 is further used to:
establish a sidelink unicast connection to the first terminal.

The terminal can improve the positioning performance of the terminal.

The embodiments of the present application further provide a network device. The network device includes a processor and a communication interface, where the communication interface is used to transmit a sidelink location request to a first terminal. The sidelink location request is used to request location of a target terminal, the first terminal is a terminal that provides a sidelink location server function, or, the first terminal is the target terminal. The network device embodiment corresponds to the above network device side method embodiment. Implementation processes and implementations of the above method embodiment are all applicable to the network device embodiment, and the same technical effects can be achieved.

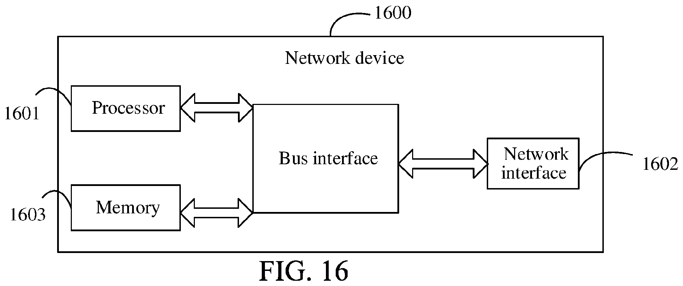

Specifically, the embodiments of the present application further provide a network side device. As shown in FIG. 16, the network side device 1600 includes: a processor 1601, a network interface 1602, and a memory 1603. The network interface 1602 is, for example, a common public radio interface (common public radio interface, CPRI).

Specifically, the network side device 1600 in the embodiments of the present application further includes: an instruction or a program stored in the memory 1603 and runnable on the processor 1601. The processor 1601 invokes the instruction or the program in the memory 1603 to execute the method executed by the modules shown in FIG. 13, and the same technical effects are achieved. To avoid repetition, details are omitted herein.

The network interface 1602 is used to transmit a sidelink location request to a first terminal, where the sidelink location request is used to request location of a target terminal, and the first terminal is a terminal that provides a sidelink location server function, or the first terminal is the target terminal.

Optionally, the network device is a location management function LMF, and the sidelink location request message is an LTE positioning protocol LPP message or a location services LCS message; or,
the network device is an access and mobility management function AMF, and the first sidelink location request message is a non-access stratum NAS message.

Optionally, the sidelink location request includes at least one of the following:
location quality of service QoS, and identification information of the target terminal.

Optionally, the sidelink location request further includes at least one of the following:
a location type, information about a reference terminal, information about a candidate anchor terminal, and sidelink location measurement result information, where
the anchor terminal is a terminal having a known location and participating in transmitting a sidelink positioning reference signal, or, the anchor terminal is a terminal having a known location and participating in measuring a sidelink positioning reference signal; and
the reference terminal is a position reference terminal for relative location or range location.

Optionally, the network interface 1602 is further used to:
receive a first sidelink location response transmitted by the first terminal, where the first sidelink location response indicates a first positioning result of the target terminal.

Optionally, the network interface 1602 is further used to:
receive, in a first condition, a first sidelink location response transmitted by the first terminal, where the first sidelink location response is used to indicate a sidelink location failure; and
the first condition includes at least one of the following:
   the target terminal is not discovered; and
   the sidelink unicast connection to the target terminal is not successfully established.

Optionally, the first sidelink location response includes failure cause information of the sidelink location failure.

Optionally, the network interface 1602 is further used to:
receive first capability information reported by the first terminal, where the first capability information is used to represent at least one of the following: a sidelink location capability; and whether a capability of the sidelink location server function is provided.

Optionally, the network interface 1602 is further used to:
transmit instruction information to the first terminal, where the instruction information is used to instruct capability information to be reported.

Optionally, the sidelink location request is transmitted to the first terminal as follows:
the sidelink location request is transmitted to the first terminal in a second condition; and
the second condition includes at least one of the following:
   in a case that the target terminal is in an idle state, the network device fails to page the target terminal;
   the network device fails in Uu-interface-based location executed for the target terminal;
   positioning accuracy of a second positioning result does not satisfy a preset requirement, and the second positioning result is a positioning result of Uu-interface-based location executed by the network device for the target terminal; and
   the first terminal has a capability of the sidelink location server function.

The network device can improve the positioning performance of the terminal.

The embodiments of the present application further provide a readable storage medium. The readable storage medium stores a program or an instruction. When executed by a processor, the program or instruction implements steps of the method for positioning according to the embodiments of the present application.

The processor is the processor in the terminal described in the above embodiment. The readable storage medium includes a computer-readable storage medium, such as a computer read-only memory ROM, a random access memory RAM, a magnetic disk, or an optical disc.

The embodiments of the present application further provide a chip. The chip includes a processor and a communication interface. The communication interface is coupled to the processor. The processor is used to run a program or an instruction to implement various processes of the embodiments of the method for positioning, and the same technical effects can be achieved. To avoid repetition, details are omitted herein.

It should be understood that the chip mentioned in the embodiment of the present application or may be referred to as a system-level chip, a system chip, a chip system, a system-on-chip, or the like.

The embodiments of the present application further provide a computer program/program product. The computer program/program product is stored in a storage medium. The computer program/program product is executed by at least one processor to implement processes of the embodiments of the method for positioning, and the same technical effects can be achieved. To avoid repetition, details are omitted herein.

The embodiments of the present application provide a system for positioning. The system includes: a first terminal, a second terminal, and a network device. The terminal may be used to execute steps of the method for positioning on a first terminal side according to the embodiments of the present application. The second terminal may be used to execute steps of the method for positioning on a second terminal side according to the embodiments of the present application. The network device may be used to execute steps of the method for positioning on a network device side according to the embodiments of the present application.

It should be noted that the terms "comprise", "include", or their any other variations are intended to cover non-exclusive inclusions. Thus a process, method, product, or apparatus including a series of elements further includes other elements that are not explicitly listed except for those elements, or further includes elements inherent to such a process, method, product, or apparatus. Without more restrictions, the elements defined by the sentence "comprise a ..." and "include a ..." do not exclude the existence of other identical elements in the process, method, article, or device including the elements. In addition, it should be noted that a scope of the method and apparatus in the implementations of the present application is not limited to execute the functions in the order shown or discussed, and may further execute the functions in a substantially simultaneous manner or in a reverse order according to the functions involved. For example, the method described may be executed in an order different from the order described, and various steps may further be added, omitted, or combined. In addition, features described with reference to some examples may be combined in other examples.

Through the description of implementations, those skilled in the art can clearly understand that the method of the above embodiments may be implemented in combination of software and a necessary general-purpose hardware platform and or may be certainly implemented through hardware. However, the former is a preferred implementation in many cases. Based on such an understanding, the technical solutions of the present application essentially or the part contributing to the prior art may be implemented in a form of a computer software product. The computer software product is stored in a storage medium (such as an ROM/RAM, a magnetic disk, or an optical disc) and includes several instructions for instructing a terminal (which may be a mobile phone, a computer, a server, an air conditioner, a network device, or the like) to execute the methods described in the embodiments of the present application.

The embodiments of the present application have been described above in conjunction with the accompanying drawings. The present application is not limited to the specific implementations described above, and the specific implementations described above are merely illustrative and not limitative. Those of ordinary skill in the art may make various variations under the teaching of the present application without departing from the spirit of the present application and the protection scope of the claims, and such variations should all fall within the protection scope of the present application.

## Claims

1. A method for positioning, comprising:
obtaining, by a first terminal, a sidelink location request, wherein the sidelink location request is used to request a location of a target terminal, and the first terminal is a terminal providing a sidelink location server function; and
executing, by the first terminal, a sidelink location operation based on the sidelink location request, and obtaining a positioning result of the target terminal.

2. The method according to claim 1, wherein the obtaining, by a first terminal, a sidelink location request comprises one of the following:
receiving, by the first terminal, a first sidelink location request from a network device;
receiving, by the first terminal, a second sidelink location request from a second terminal through a sidelink unicast connection; and
generating, by the first terminal, a third sidelink location request.

3. The method according to claim 2, wherein
the network device is a location management function LMF, and the first sidelink location request message is an LTE positioning protocol LPP message or a location services LCS message; or,
the network device is an access and mobility management function AMF, and the first sidelink location request message is a non-access stratum NAS message; or,
the second sidelink location request is at least one of the following:
a Sidelink positioning protocol message, a PC5-signaling S message, and a PC5 radio resource control RRC message.

4. The method according to claim 3, wherein the sidelink location request comprises at least one of the following:
location quality of service QoS, and identification information of the target terminal.

5. The method according to claim 4, further comprising:
determining, by the first terminal based on the location QoS, at least one of the following:
a sidelink location method, location configuration information, an anchor terminal participating in location, and a reference terminal participating in location, wherein
the anchor terminal is a terminal having a known location and participating in transmitting a sidelink positioning reference signal, or, the anchor terminal is a terminal having a known location and participating in measuring a sidelink positioning reference signal; and
the reference terminal is a position reference terminal for relative location or range location.

6. The method according to claim 4, wherein the sidelink location request further comprises at least one of the following:
a location type, information about a reference terminal, information about a candidate anchor terminal, and sidelink location measurement result information, wherein
the anchor terminal is a terminal having a known location and participating in transmitting a sidelink positioning reference signal, or, the anchor terminal is a terminal having a known location and participating in measuring a sidelink positioning reference signal;
the reference terminal is a position reference terminal for relative location or range location; and
the sidelink location measurement result information is used to assist in location of the target terminal.

7. The method according to any one of claims 1 to 6, wherein the sidelink location operation comprises at least one of the following:
receiving a sidelink location measurement result transmitted by the target terminal;
receiving a sidelink location result transmitted by the target terminal;
receiving a sidelink location measurement result transmitted by the anchor terminal; and
receiving a sidelink location result transmitted by the anchor terminal.

8. The method according to claim 7, wherein the sidelink location operation further comprises at least one of the following:
obtaining a sidelink location capability of the target terminal;
obtaining a sidelink location capability of the anchor terminal;
transmitting a sidelink location configuration to the target terminal; and
transmitting the sidelink location configuration to the anchor terminal.

9. The method according to any one of claims 1 to 6, wherein before the executing, by the first terminal, a sidelink location operation based on the sidelink location request, the method further comprises at least one of the following:
executing, by the first terminal, a discovery process of the target terminal;
establishing, by the first terminal, a sidelink unicast connection to the target terminal;
executing, by the first terminal, a discovery process of the anchor terminal; and
establishing, by the first terminal, a sidelink unicast connection to the anchor terminal.

10. The method according to any one of claims 1 to 6, further comprising:
transmitting, by the first terminal, a first sidelink location response in a first condition, wherein the first sidelink location response is used to indicate a sidelink location failure; and
the first condition comprises at least one of the following:
the target terminal is not discovered; and
the sidelink unicast connection to the target terminal is not successfully established.

11. The method according to claim 10, wherein the first sidelink location response comprises failure cause information of the sidelink location failure.

12. The method according to any one of claims 1 to 6, wherein after the executing, by the first terminal, a sidelink location operation based on the sidelink location request, and the obtaining a positioning result of the target terminal, the method further comprises:
transmitting, by the first terminal, a second sidelink location response, wherein the second sidelink location response is used to indicate the positioning result of the target terminal.

13. The method according to any one of claims 1 to 6, wherein the first terminal is the target terminal;
or,
the first terminal and the target terminal are different terminals, and the obtaining, by a first terminal, a sidelink location request comprises:
receiving, by the first terminal, the sidelink location request transmitted by the target terminal.

14. The method according to any one of claims 1 to 6, wherein in a case that the first terminal is the target terminal, the method further comprises:
reporting, by the first terminal, capability information to the network device, wherein the capability information is used to represent at least one of the following:
a sidelink location capability; and
a capability of the sidelink location server function.

15. The method according to claim 14, further comprising:
receiving, by the first terminal, instruction information transmitted by the network device, wherein the instruction information is used to instruct the capability information to be reported.

16. A method for positioning, comprising:
transmitting, by a second terminal, a sidelink location request to a first terminal, wherein the sidelink location request is used to request location of a target terminal, and the first terminal is a terminal providing a sidelink location server function; and
the second terminal and the target terminal are a same terminal, or, the second terminal and the target terminal are different terminals.

17. The method according to claim 16, wherein the sidelink location request is at least one of the following:
a Sidelink positioning protocol message, a PC5-signaling S message, and a PC5 radio resource control RRC message.

18. The method according to claim 17, wherein the sidelink location request comprises at least one of the following:
location quality of service QoS, and identification information of the target terminal.

19. The method according to claim 18, wherein the sidelink location request further comprises at least one of the following:
a location type, information about a reference terminal, information about a candidate anchor terminal, and sidelink location measurement result information, wherein
the anchor terminal is a terminal having a known location and participating in transmitting a sidelink positioning reference signal, or, the anchor terminal is a terminal having a known location and participating in measuring a sidelink positioning reference signal;
the reference terminal is a position reference terminal for relative location or range location; and
the sidelink location measurement result information is used to assist in location of the target terminal.

20. The method according to claim 16, wherein before the transmitting, by a second terminal, a sidelink location request to a first terminal, the method further comprises:
receiving, by the second terminal, a fourth sidelink location request transmitted by a network device, wherein the fourth sidelink location request comprises at least one of the following:
location QoS, information about a reference terminal, information about a candidate anchor terminal, and information about the first terminal.

21. The method according to claim 20, wherein in a case that the sidelink location request transmitted to the first terminal and the fourth sidelink location request comprise the location QoS, a delay requirement that the sidelink location request transmitted to the first terminal comprises the location QoS is lower than a delay requirement that the fourth sidelink location request comprises the location QoS.

22. The method according to any one of claims 16 to 21, wherein in a case that the second terminal and the target terminal are the same terminal, and the target terminal provides no location server function, the method further comprises:
determining, by the second terminal, the first terminal.

23. The method according to claim 22, further comprising:
reporting, by the second terminal, capability information to the network device, wherein the capability information is used to represent at least one of the following:
a sidelink location capability; and
whether a capability of the sidelink location server function is provided.

24. The method according to claim 23, further comprising:
receiving, by the second terminal, instruction information transmitted by the network device, wherein the instruction information is used to instruct the capability information to be reported.

25. The method according to claim 22, wherein before the transmitting, by the second terminal, a sidelink location request to a first terminal, the method further comprises:
establishing, by the second terminal, a sidelink unicast connection to the first terminal.

26. A method for positioning, comprising:
transmitting, by a network device, a sidelink location request to a first terminal, wherein the sidelink location request is used to request location of a target terminal, the first terminal is a terminal providing a sidelink location server function, or, the first terminal is the target terminal.

27. The method according to claim 26, wherein
the network device is a location management function LMF, and the sidelink location request message is an LTE positioning protocol LPP message or a location services LCS message; or,
the network device is an access and mobility management function AMF, and the first sidelink location request message is a non-access stratum NAS message.

28. The method according to claim 27, wherein the sidelink location request comprises at least one of the following:
location quality of service QoS, and identification information of the target terminal.

29. The method according to claim 28, wherein the sidelink location request further comprises at least one of the following:
a location type, information about a reference terminal, information about a candidate anchor terminal, and sidelink location measurement result information, wherein
the anchor terminal is a terminal having a known location and participating in transmitting a sidelink positioning reference signal, or, the anchor terminal is a terminal having a known location and participating in measuring a sidelink positioning reference signal; and
the reference terminal is a position reference terminal for relative location or range location.

30. The method according to any one of claims 26 to 29, further comprising:
receiving, by the network device, a first sidelink location response transmitted by the first terminal, wherein the first sidelink location response indicates a first positioning result of the target terminal.

31. The method according to any one of claims 26 to 29, further comprising:
receiving, by the network device in a first condition, a first sidelink location response transmitted by the first terminal, wherein the first sidelink location response is used to indicate a sidelink location failure; and
the first condition comprises at least one of the following:
the target terminal is not discovered; and
the sidelink unicast connection to the target terminal is not successfully established.

32. The method according to claim 31, wherein the first sidelink location response comprises failure cause information of the sidelink location failure.

33. The method according to any one of claims 26 to 29, further comprising:
receiving, by the network device, first capability information reported by the first terminal, wherein the first capability information is used to represent at least one of the following: a sidelink location capability; and whether a capability of the sidelink location server function is provided.

34. The method according to claim 33, further comprising:
transmitting, by the network device, instruction information to the first terminal, wherein the instruction information is used to instruct capability information to be reported.

35. The method according to any one of claims 26 to 29, wherein the transmitting, by a network device, a sidelink location request to a first terminal comprises:
transmitting, by the network device in a second condition, the sidelink location request to the first terminal; and
the second condition comprises at least one of the following:
in a case that the target terminal is in an idle state, the network device fails to page the target terminal;
the network device fails in Uu-interface-based location executed for the target terminal;
positioning accuracy of a second positioning result does not satisfy a preset requirement, and the second positioning result is a positioning result of Uu-interface-based location executed by the network device for the target terminal; and
the first terminal has a capability of the sidelink location server function.

36. An apparatus for positioning, comprising:
an obtainment module used to obtain a sidelink location request, wherein the sidelink location request is used to request location of a target terminal, and a first terminal is a terminal providing a sidelink location server function; and
an execution module used to execute a sidelink location operation based on the sidelink location request, and obtain a positioning result of the target terminal.

37. An apparatus for positioning, comprising:
a transmission module used to transmit a sidelink location request to a first terminal, wherein the sidelink location request is used to request location of a target terminal, and the first terminal is a terminal providing a sidelink location server function; and
a second terminal and the target terminal are a same terminal, or, the second terminal and the target terminal are different terminals.

38. An apparatus for positioning, comprising:
a first transmission module used to transmit a sidelink location request to a first terminal, wherein the sidelink location request is used to request location of a target terminal, the first terminal is a terminal providing a sidelink location server function, or, the first terminal is the target terminal.

39. A terminal, comprising a memory and a processor, wherein the memory stores a program or an instruction runnable on the processor, when executed by the processor, the program or the instruction implements steps of the method for positioning according to any one of claims 1 to 15, or, when executed by the processor, the program or the instruction implements steps of the method for positioning according to any one of claims 16 to 25.

40. A network device, comprising a processor and a memory, wherein the memory stores a program or an instruction runnable on the processor, and when executed by the processor, the program or the instruction implements steps of the method for positioning according to any one of claims 26 to 35.

41. A readable storage medium, storing a program or an instruction, wherein when executed by a processor, the program or the instruction implements steps of the method for positioning according to any one of claims 1 to 15; alternatively, when executed by a processor, the program or the instruction implements steps of the method for positioning according to any one of claims 16 to 25; or, when executed by a processor, the program or the instruction implements steps of the method for positioning according to any one of claims 26 to 35.
